(19) Europäisches Patentamt / European Patent Office / Office européen des brevets

(11) **EP 3 100 508 B1**

(12) **EUROPEAN PATENT SPECIFICATION**

(45) Date of publication and mention
of the grant of the patent:
**13.05.2020 Bulletin 2020/20**

(21) Application number: **15743102.4**

(22) Date of filing: **29.01.2015**

(51) Int Cl.:
*H04W 16/14* *(2009.01)*          *H04W 28/26* *(2009.01)*
*H04W 88/02* *(2009.01)*          *H04W 88/00* *(2009.01)*
*H04W 74/08* *(2009.01)*          *H04W 84/12* *(2009.01)*

(86) International application number:
**PCT/US2015/013469**

(87) International publication number:
**WO 2015/116789 (06.08.2015 Gazette 2015/31)**

(54) **SYSTEMS, METHODS AND DEVICES FOR CHANNEL RESERVATION**

SYSTEME, VERFAHREN UND VORRICHTUNGEN ZUR KANALRESERVIERUNG

SYSTÈMES, PROCÉDÉS ET DISPOSITIFS DE RÉSERVATION DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2014 US 201461933879 P
25.09.2014 US 201414496725**

(43) Date of publication of application:
**07.12.2016 Bulletin 2016/49**

(73) Proprietor: **Intel IP Corporation
Santa Clara, CA 95054 (US)**

(72) Inventors:
• **BASHAR, Shafi**
**Santa Clara, California 95054 (US)**
• **HAN, Seunghee**
**Cupertino, California 95014 (US)**
• **FWU, Jong-Kae**
**Sunnyvale, California 94087 (US)**
• **AZIZI, Shahrnaz**
**Cupertino, California 95014 (US)**
• **NIU, Huaning**
**Milpitas, California 95035 (US)**

(74) Representative: **Rooney, John-Paul
Withers & Rogers LLP
4 More London Riverside
London SE1 2AU (GB)**

(56) References cited:
**WO-A1-2013/013409          US-A1- 2008 108 365
US-A1- 2011 205 941          US-A1- 2013 279 376**

• **TIMO NIHTILA ET AL.: 'System performance of LTE and IEEE 802.11 coexisting on a shared frequency band' WIRELESS COMMUNICATIONS AND NETWORKING CONFERENCE (WCNC 2013, pages 1038 - 1043, XP055356721 Retrieved from the Internet: <URL:http://ieeexplore.ieee.org/stamp/stamp .jsp?arnumber=6554707>**
• **ERIKA ALMEIDA ET AL.: 'Enabling LTE/WiFi coexistence by LTE blank subframe allocation' COMMUNICATIONS (ICC), 2013 IEEE INTERNATIONAL CONFERENCE 09 June 2013, pages 5083 - 5088, XP032522656 Retrieved from the Internet: <URL:http://ieeexplore.ieee.org/stamp/stamp .jsp?tp=&arnumber=6655388>**
• **ANDRE M. CAVALCANTE ET AL.: 'Performance Evaluation of LTE and Wi-Fi Coexistence in Unlicensed Bands' VEHICULAR TECHNOLOGY CONFERENCE (VTC SPRING 02 June 2013, pages 1 - 6, XP032547839 Retrieved from the Internet: <URL:http://ieeexplore.ieee.org/xpl/article Details.jsp?arnumber=6692702>**
• **MIHAELA BELURI ET AL.: 'Mechanisms for LTE Coexistence in TV White Space' DYNAMIC SPECTRUM ACCESS NETWORKS (DYSPAN), 2012 IEEE INTERNATIONAL SYMPOSIUM 16 October 2012, pages 317 - 326, XP032342357 Retrieved from the Internet: <URL:http://ieeexplore.ieee.org/xpl/article Details.jsp?tp=&arnumber=6478155>**

EP 3 100 508 B1

**Description**

Related Application

This application claims the benefit under 35 U.S.C. § 119(e) of U.S. Provisional Application No. 61/933,879 filed January 31, 2014.

Technical Field

The present disclosure relates to coexistence of wireless protocols in a medium and more specifically to reserving a medium for use with a wireless protocol.

US 2011/0205941 A1 discloses a system and a method for spectrum sharing among plural wireless radio networks. According to this document, spectrum that overlaps in time, geography and frequency is allocated to more than one radio network. The networks share the spectrum by employing spectrum sharing in accordance with spectrum sharing control data to avoid collisions between the transmissions of the networks.

US 2013/0279376 A1 discloses methods and apparatus for opportunistic radio resource allocation in multi-carrier communication systems. According to this document, methods and apparatus for dynamic sharing of resources such as radio frequency (RF) spectrum in a wireless system are provided. In one embodiment of this document, the sharing is conducted among a number of base stations (e.g., eNodeBs or Access Points (APs)), or among different radio access technologies (RATs). In one implementation, the sharing is accomplished through reservation of new RF carriers, and temporary assignment (and release) of one or more RF carriers to the multi-carrier enabled radio access systems or base stations. Such dynamic spectrum sharing allows opportunistic use of additional RF carriers in a multi-carrier system as opposed to permanent availability to the eNodeB or AP regardless of their effective usage.

US 2008/0108365 A1 discloses a method and apparatus for dynamically allocating spectrum available within a region including a plurality of base stations in wireless networks. The method includes obtaining a plurality of spectrum demands associated with at least a portion of the base stations, each spectrum demand requesting a portion of the available spectrum, and determining a plurality of spectrum allocations satisfying at least a portion of the spectrum demands. The spectrum allocations are determined by processing the spectrum demands using network information such as base station information associated with the base stations and region information such as terrain information associated with the region. The region information may include signal propagation information.

Brief Description of the Drawings

Fig. 1 is a schematic diagram illustrating a system for channel reservation consistent with embodiments disclosed herein.

Fig. 2 is a schematic diagram illustrating a long term evolution (LTE) frame consistent with embodiments disclosed herein.

Fig. 3 is a graph of an LTE channel reservation communication consistent with embodiments disclosed herein.

Fig. 4 is a graph of a modified LTE subframe consistent with embodiments disclosed herein.

Fig. 5 is a graph illustrating an LTE transmission with a modified subframe structure and legacy subframe structure consistent with embodiments disclosed herein.

Fig. 6 is an example of a modified licensed assisted access, also known as long term evolution over unlicensed spectrum, (LAA/LTE-U) reservation signal muting pattern consistent with embodiments disclosed herein.

Fig. 7 is an example of a legacy LAA/LTE-U frame with reservation signal muting pattern consistent with embodiments disclosed herein.

Fig. 8A is an example of frequency division duplex (FDD) LTE frame consistent with embodiments disclosed herein.

Fig. 8B is an example of a time division duplex (TDD) LTE frame consistent with embodiments disclosed herein.

Fig. 9 is a graph of LAA/LTE-U transmissions that include a guard period (GP) for use with a reservation signal consistent with embodiments disclosed herein.

Fig. 10 is a graph of example of using GP for LAA/LTE-U channel reservation consistent with embodiments disclosed herein.

Fig. 11 is a graph of example of using an SRS symbol for LAA/LTE-U channel reservation consistent with embodiments disclosed herein.

Fig. 12 is a graph of example of transmitting a redundant channel reservation consistent with embodiments disclosed herein.

Fig. 13 is a flow chart illustrating a method for channel reservation consistent with embodiments disclosed herein.

Fig. 14 is a flow chart illustrating a method for a duplicate channel reservation consistent with embodiments disclosed herein.

Fig. 15 is a flow chart illustrating a method for extending a channel reservation consistent with embodiments disclosed herein.

Fig. 16 is a diagram of an LTE protocol stack consistent with embodiments disclosed herein.

Fig. 17A is a diagram of a subframe muting gap consistent with embodiments disclosed herein.

Fig. 17B is a diagram of a frame muting gap consistent with embodiments disclosed herein.

Fig. 17C is a diagram of a symbol muting gap consistent with embodiments disclosed herein.

Fig. 18 is a schematic diagram of a mobile device consistent with embodiments disclosed herein.

Detailed Description of Preferred Embodiments

The object of the present application is solved by the independent claims. Advantageous embodiments are described by the dependent claims.

A detailed description of systems and methods consistent with embodiments of the present disclosure is provided below. While several embodiments are described, it should be understood that the disclosure is not limited to any one embodiment, but instead encompasses numerous alternatives, modifications, and equivalents. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

Techniques, apparatus and methods are disclosed that enable a device (such as a network controller) using a first protocol to incorporate a reservation of a medium using a second protocol within the bounds of the first protocol. For example, an evolved node B (also known as an e node B or eNB) using a licensed assisted access (LAA) over unlicensed spectrum (which is also known as long term evolution over unlicensed spectrum (LTE-U)) protocol can be configured to reserve unlicensed spectrum (e.g., unlicensed frequency bands such as 5725 to 5850 MHz band currently used by IEEE 802.11 a, n and ac wireless local area networks (WLANs)) using reservation message recognized by a radio access technology (RAT), such as a WLAN message or an LAA message to a second carrier/operator, placed within a muting gap within the LAA protocol.

In one embodiment, the eNB selects to broadcast a WLAN reservation message using a set of options including: (1) from a control channel region of LTE-U, (2) from a muting gap indicated by a reservation muting symbol pattern indicator, (3) from a time division duplex (TDD) guard period (GP), (4) from a TDD uplink pilot time slot (UpPTS), (5) from an empty uplink (UL) subframe or (6) from a sounding reference signal (SRS). In some embodiments, the LTE-U eNB can use a listen-before-talk protocol to reserve the medium with the reservation message. In other embodiments, an LTE-U eNB can send out the reservation signal at fixed time/resource, without changing an overall 1 ms LTE interval. In another embodiment, the eNB selects to broadcast an LAA reservation message using one of the set of options. In yet another embodiment, the eNB selects to broadcast an LAA reservation message and a WLAN reservation message using one or more of the set of options.

It should be recognized that long term evolution over unlicensed spectrum (LTE-U) is also referred to as Licensed Assisted Access (LAA) using LTE herein. Where LTE-U is mentioned, LAA can also be considered.

Various mechanisms of transmission of a reservation message can be compatible with disclosed embodiments. In the embodiments disclosed, transmission opportunities in an LTE-U frame structure are identified. While an eNB is generally discussed, it should be recognized that other options, such as a small cell (or booster), can be used.

LTE-U extends an LTE platform into unlicensed deployments, enabling operators and vendors to use existing or planned investments in a long term evolution (LTE)/evolved packet core (EPC) hardware in the radio and core network. In some installations, LTE-U is considered a Supplemental Downlink or a Component Carrier (CC) in an LTE Carrier Aggregation (CA) configuration. The use of LTE in unlicensed bands provides coexistence issues of LTE with other incumbent technologies in that band. Due to multiple LTE operators using the same unlicensed spectrum, self-coexistence among different LTE operators in the same band can also present issues.

The design of LTE-U can be dependent on the spectrum under consideration. The channel characteristics (such as path loss, frequency selectivity, etc.) are dependent on the carrier frequency. In addition, incumbent technologies in the considered spectrum can affect the interference profile of an LTE-U network deployed in the unlicensed band. One potential unlicensed spectrum that can be considered for LTE-U is the 5 GHz spectrum (e.g., 5725 to 5850 MHz band currently used by IEEE 802.11 a/n/ac wireless local area networks (WLANs)). It should be recognized that other unlicensed spectrum exist and can be used without departing from the scope of this disclosure (e.g., ISM bands including 2.4 to 2.5 GHz, 5.725 to 5.875 GHz, 24 to 24.250 GHz, etc.).

LTE is a synchronous technology; eNB periodically transmits some signals even in absence of any traffic (i.e., eNB sends cell specific reference signal (CRS) to support UE synchronization with eNB). To provide better coexistence with WLAN, other LTE-U operators, and any other radio access technology (RAT) using the medium, an eNB using an LTE-U protocol can introduce gaps in its transmission to provide opportunities for these other RATs to operate. These gaps in LTE-U transmission are known as coexistence muting gaps (or muting gaps). During these muting gaps, the LTE-U eNB and UEs will refrain from transmission, thereby allowing other RAT(s), as well as, other LTE-U operators (such as a carrier) to use the medium. Introducing muting gaps alone may not suffice. Even with muting gaps, WLAN devices can attempt to occupy the channel during the LTE-U transmission duration, due to operation of WLAN Clear Channel Assessment (CCA) rules definitions and the fact that CCA distinguishes between detection of a WLAN packet (using carrier sense or CS) and other technologies in the band (using energy detection or ED).

For example, in case of 802.11 n/ac, if the WLAN receiver can detect the WLAN preamble, it employs a lower threshold value of -82 dBm for 20 MHz channel spacing, whereas in absence of any such preamble, a higher threshold value of -62 dBm for 20 MHz channel spacing is used. This may lead to increased level of interference/collisions between LTE-U and WLAN transmissions, and WLAN will not be able to identify the sources of these collisions. Therefore, back-off intervals of WLAN stations (STAs) will gradually increase to the maximum values, which in fact make LTE-U operation intrusive to WLAN operation. The collision with LTE-U transmission will also degrade the LTE-U transmission quality, thereby increasing the chances of packet failure, as well as the number of retransmissions.

WLANs can include technology from the IEEE 802.11 family of standards, which can also include technology known as Wi-Fi™ from the Wi-Fi Alliance.

Reservation Messages

Several mechanisms can be used to prevent WLAN devices from attempting to access the channel during LTE-U transmissions. These mechanisms are called channel reservation messages (or channel reservation signals). When used in conjunction with an LTE-U protocol to reserve a communication medium, these mechanisms are called LTE-U channel reservation messages (or LTE-U channel reservation signals). These channel reservation messages can include, but are not limited to (a) physical layer convergence protocol (PLCP) preamble broadcasting and (b) request to send (RTS) and/or clear to send (CTS) broadcasting. In (a), PLCP preamble broadcasting can also be known as physical layer (PHY) spoofing. In one embodiment, prior to sending an LTE signal, an eNB can transmit a portion of a WLAN PHY layer packet consisting of PLCP preamble (e.g., short training symbol field (STF), long training symbol field (LTF), and signal field (SIG)) without data. When using a preamble for reservation, a UE does not need to transmit CTS or RTS to reserve the time for WLAN communication (i.e., there is no need for a UE to implement/equip/turn on a WLAN modem). In other embodiments, a UE can send a PLCP preamble message to reserve the channel for uplink LTE-U transmission. By sending this preamble, WLAN stations (STAs) that receive the preamble will refrain from transmitting during the duration of time indicated in the preamble (which is indicated by the length field).

In some embodiments, the eNB transmits a preamble to reserve the LTE-U data transmission. In some cases, a maximum reserved time is limited to 5.45 ms using a preamble based reservation (which is further described later in a section entitled PLCP Preamble Based Reservation). A data length in the SIG field can virtually indicate the LTE data region to a WLAN device. By using a preamble reservation, LTE data will be transmitted in the indicated virtual data region of the WLAN reservation. When a WLAN device (STA) detects the virtual signal (i.e., preamble) and successfully decodes the signal as a part of a carrier sensing operation, the STA can skip the carrier sensing operation during the LTE data transmission from the length given by SIG field. This skipping allows the STA to save the processing power and/or radio power for carrier sensing during LTE data transmission like existing WLAN protocol (which can be viewed as backwards compatible in terms of carrier sensing). The eNB can also configure the MBSFN subframes to allow the WLAN STA use of the subframes for their communication.

In (b), RTS/CTS broadcasting can be known as using WLAN MAC-level channel reservation technique by an eNB and/or a UE. For example, prior to sending the LTE traffic, an eNB (and/or UE) can transmit fully functional RTS/CTS frames in accordance with WLAN specifications. The RTS and/or CTS message includes a duration that causes WLAN STAs that receive the duration to refrain from transmitting during the duration of time indicated in the RTS and/or CTS message. In addition to these messages, any other message transmitted by LTE-U signal indicating the intention of reserving the medium for further transmission and/or the message recognized by WLAN or other incumbent RATs, as well as other LTE-U operators can also be considered as LTE-U channel reservation signals..

Types of Reservation Messages

Reservation messages can include (A) PLCP preamble based reservations and/or (B) RTS/CTS based reservations.

(A) PLCP Preamble Based Reservation

In one embodiment and by using a PLCP preamble based LTE-U channel reservation signal, $T_{DATA}$ time can be reserved, where value of $T_{DATA}$ can be found using the following equation:

$$T_{DATA} = N_{SYM} \times T_{SYM}$$

Where $N_{SYM}$ is given by the following equation:

$$N_{SYM} = \left\lceil \frac{(16 + LENGTH \times 8 + 6)}{N_{DBPS}} \right\rceil$$

The value of LENGTH can vary from 0 to 4095. For 20 MHz WLAN channel bandwidth, $T_{SYM}$ is 4 $\mu$s for 802.11 a/g/n/ac. $N_{DBPS}$ is the number of data bits per OFDM symbol. If BPSK modulation with one half code rate is used, by using the above equation, a maximum of 5.45 ms can be reserved for 20 MHz WLAN channel bandwidth. Therefore, a PLCP preamble based LTE-U channel reservation needs to be repeated every five subframes for LTE-U to keep using the channel.

For 20 MHz WLAN channel bandwidth, the length of the legacy 802.11a PLCP preamble (including STF and LTF) is 16 $\mu$s, and PLCP header (excluding the SERVICE part) is transmitted using one OFDM symbol. Therefore, the PLCP preamble based LTE-U channel reservation signal will require total 20 $\mu$s to transmit for 20 MHz WLAN channel bandwidth.

(B) RTS/CTS Based Reservation

In another embodiment and by employing an RTS/CTS based method, a channel can be reserved for a much longer duration. In case of one RTS-only embodiment, or one CTS-to-self transmission from eNB embodiment, a maximum of 32.7 ms of channel can be reserved.

For example, an eNB based RTS (request) and UE based CTS transmission (in response) is adopted, a maximum of (32767 - TSIFS - TCTS) $\mu$s time can be reserved, where the value of TSIFS (or time of short inter-frame space) is 16 $\mu$s for 20 MHz 802.11 a/g/n/ac WLAN channel bandwidth. The value of TCTS (or time cost of transmitting CTS) depends on the modulation and coding rate. The joint RTS/CTS based method has the added benefit of reducing the hidden terminal problem.

In Table 1, the time required to transmit RTS, CTS-to-self and joint RTS/CTS based LTE-U channel reservation is shown.

**Table 1 - Time required in $\mu$s for different RTS/CTS based LTE-U channel reservation signals**

| Modulation | Coding Rate | RTS Only ($T_{RTS}$) | CTS-to-Self ($T_{CTS}$) | Joint RTS/CTS ($T_{CTS}$ + $T_{SIFS}$ + $T_{CTS}$) |
|---|---|---|---|---|
| BPSK | 1/2 | 52 | 44 | 112 |
| BPSK | 3/4 | 44 | 36 | 96 |
| QPSK | 1/2 | 36 | 32 | 84 |
| QPSK | 3/4 | 32 | 28 | 76 |
| 16-QAM | 1/2 | 28 | 28 | 72 |
| 16-QAM | 3/4 | 28 | 24 | 68 |
| 64-QAM | 2/3 | 24 | 24 | 64 |
| 64-QAM | 3/4 | 24 | 24 | 64 |

In some embodiments, a duration of an LTE symbol is 66.7 $\mu$s (71.3 $\mu$s including CP). A PLCP preamble based, RTS-only and CTS-to-self based LTE-U reservation signal can fit with the duration of one LTE symbol. However, the joint RTS-CTS based LTE-U reservation signal can require the time duration of at least two LTE symbols.

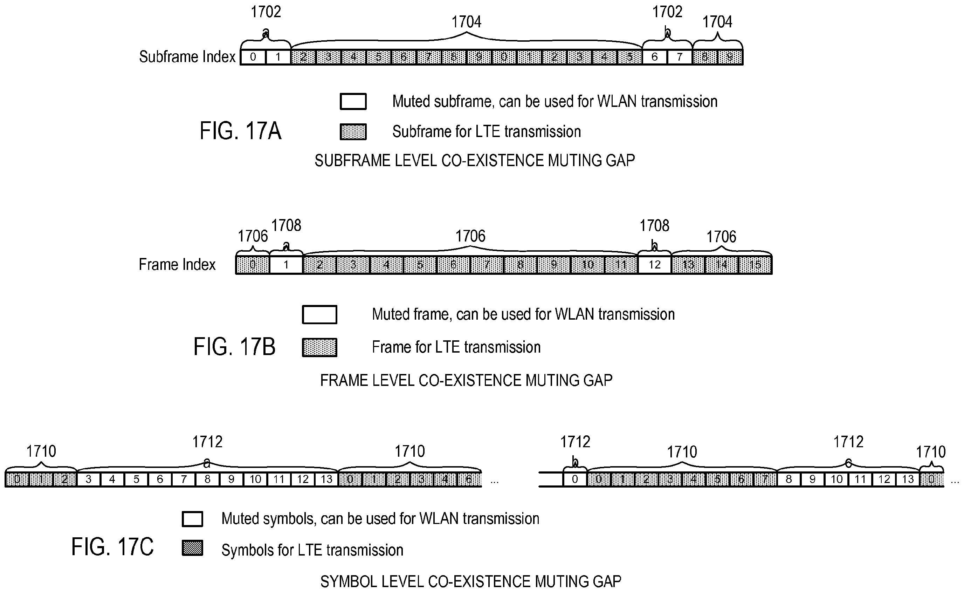

Based on the above discussion, not all LTE-U channel reservation signals can be applied to reserve different granularity of coexistence muting gaps, depending on embodiment configurations. PLCP preamble based LTE-U channel reservation signal can be more suitable to finer granularity, e.g., symbol, slot, and subframe level coexistence muting gaps. Whereas, RTS-CTS based technique can be more suitable to frame level coexistence muting gaps (see, e.g., Figs. 17A, 17B, 17C for more description on muting gap granularity).

Placement of Reservation Messages

The reservation message can be transmitted by LTE-U eNB or UE prior to transmitting the actual LTE data to reserve the medium, as well as during the LTE transmission, to further extend or reinforce the reservation. The placement of reservation message can be selected (1) from a control channel region of LTE-U, (2) from a muting gap indicated by a reservation muting symbol pattern indicator, (3) from a time division duplex (TDD) guard period (GP), (4) from a TDD uplink pilot time slot (UpPTS), (5) from an empty uplink (UL) subframe or (6) from a sounding reference signal (SRS).

(1)Using Control Channel Region for Reservation Messages

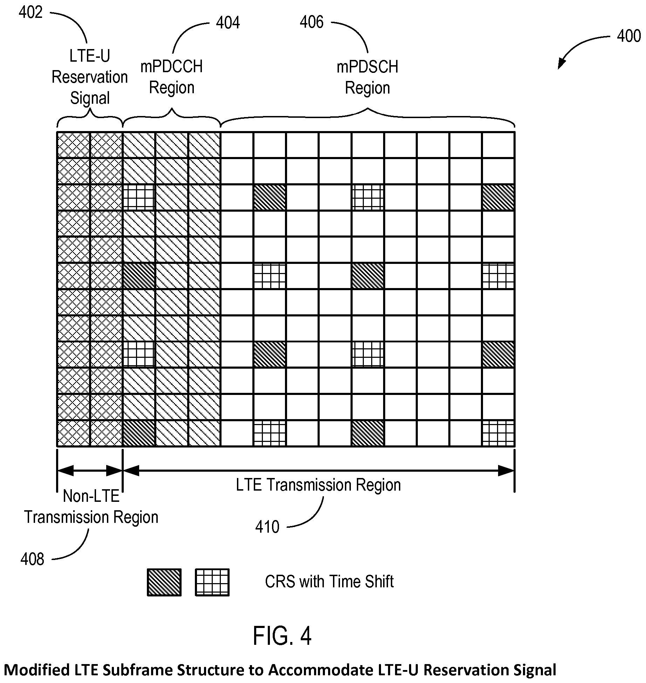

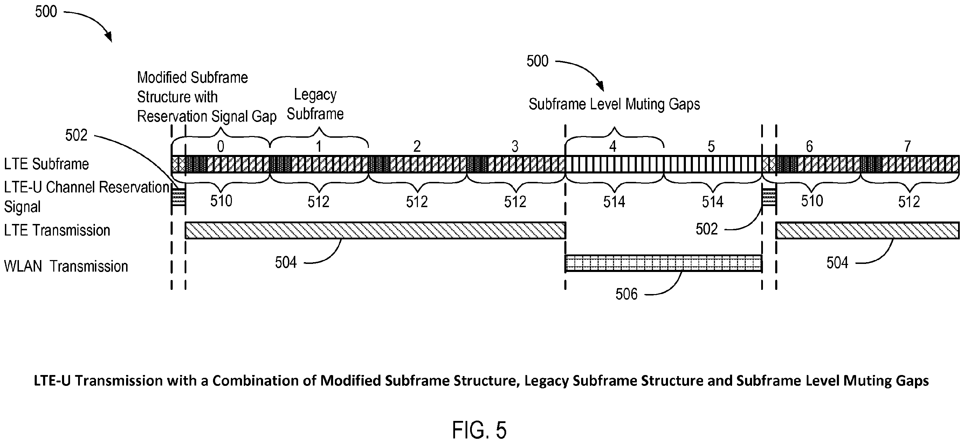

In one embodiment and in an LTE subframe, the first one, two or three orthogonal frequency division multiplexing (OFDM) symbols can be used for control signal transmission. The number of OFDM symbol used for physical downlink control channel (PDCCH) transmission can be dynamically varied on a per-subframe basis independently for each component carrier using physical control format indicator channel (PCFICH). PCFICH information is mapped to the first OFDM symbol in LTE subframe. By restricting the transmission of PDCCH in one or two symbols of a PDCCH region, the rest of the symbols in the PDCCH region can be used to transmit LTE-U reservation signal. Several mechanisms can be envisioned to achieve this. These methods can be backwards compatible with 3GPP Rel-11 LTE specifications (see, e.g., Fig. 4), 3GPP Release 11 by the Third Generation Partnership Project (3GPP), or non-backwards compatible (see, e.g., Figs. 5-7).

(2) Using Reservation Muting Symbol Pattern Indicator to transmit Reservation Messages

In another embodiment, an LTE-U reservation muting symbol pattern indicator field can be introduced in LTE specification (see, e.g., Figs. 5-7). Such reservation muting symbol pattern can be pre-determined or indicated semi-statically by higher layer signaling. A reservation muting pattern can indicate certain symbols in a subframe/frame to be used for LTE-U reservation signal transmission. An eNB or UE can refrain from LTE signal transmission on these symbols (i.e., transmission on these symbols will be muted for LTE-U signal). Instead, eNB or UE will then use these muted symbols to transmit reservation or any other co-existence related message. The muting of symbols can be achieved by using puncturing of resource elements (REs) in the muting symbols or rate-matching around the REs in the muting symbols.

(3) Using TDD Guard Period for Reservation Messages

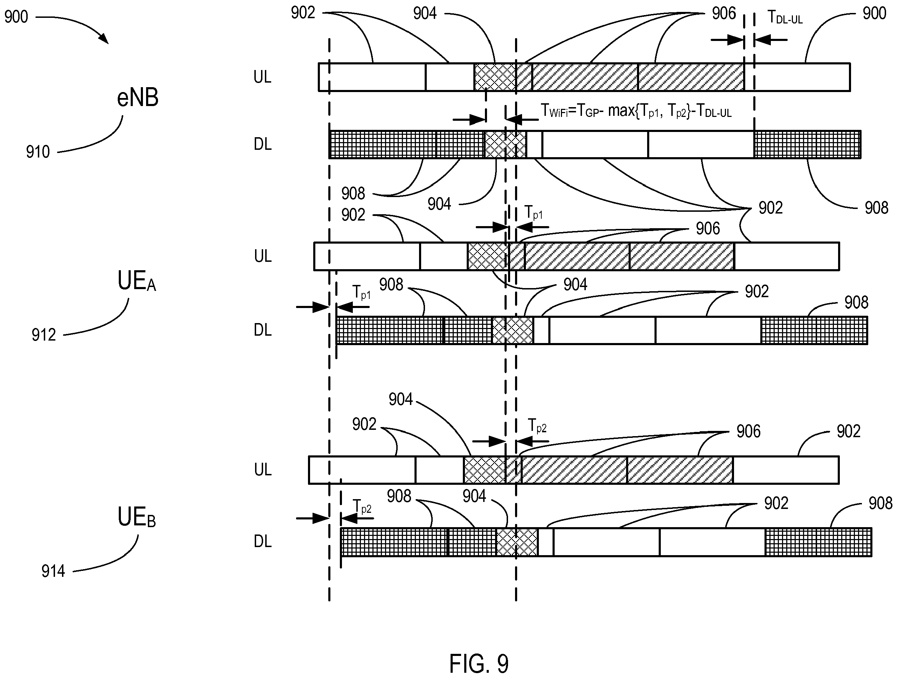

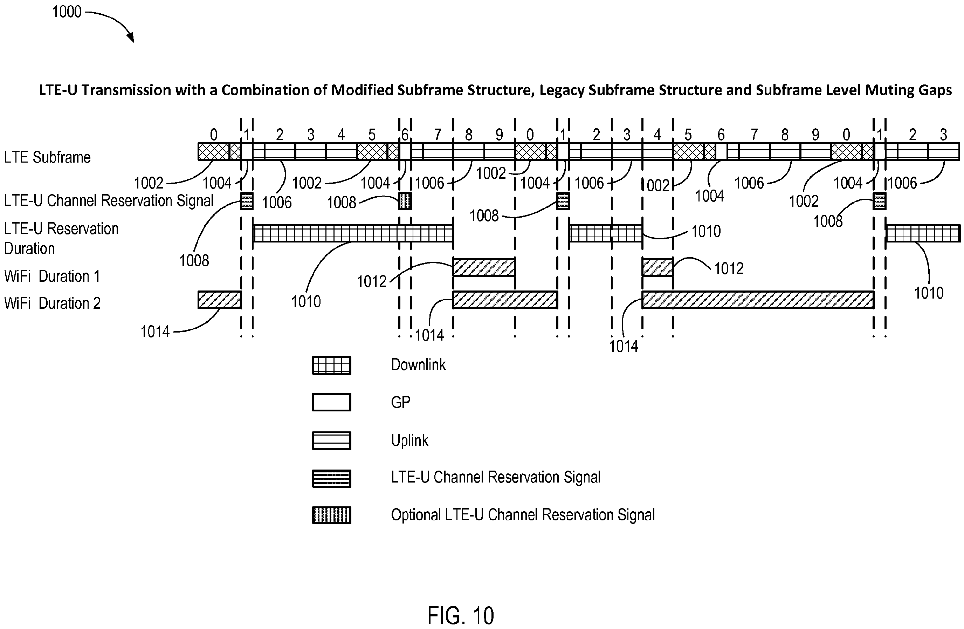

In an embodiment, a time division duplex (TDD) guard period (GP) provides a muting gap that can be used for a reservation message (see, e.g., Figs. 9 and 10). When TDD transmission is used, a GP field between downlink pilot time slot (DwPTS) and uplink pilot time slot (UpPTS) in a special subframe is unused by LTE transmission. The GP is provided in LTE for at least two reasons. A GP is allows for downlink (DL) to uplink (UL) switching time for a transition of RF circuitries of an eNB and a UE. A GP accommodates a timing advance from a UE (with UEs able to have large values of timing advance). A GP is also designed to cover an LTE cell radius of up to 100 km.

(4) Using TDD UpPTS Field for Reservation Messages

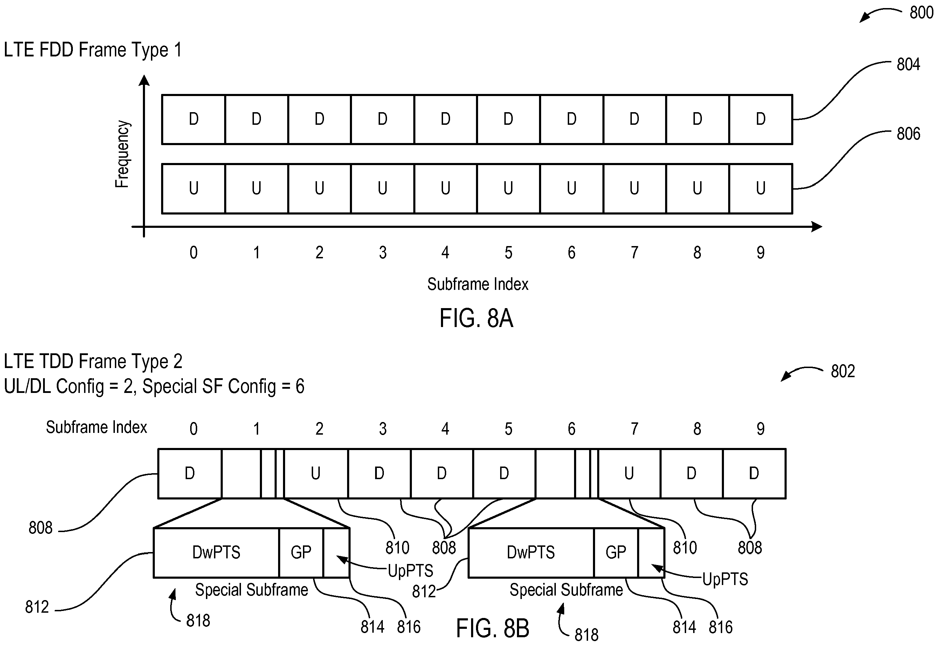

In one embodiment, a TDD UpPTS field can be used for a reservation message (see, e.g., Fig. 8B). A length of UpPTS field is limited to one or two single carrier frequency division multiple access (SC-FDMA) symbols. The UpPTS field is not used for UL Data transmission. Generally the use of this field is limited to physical random access channel (PRACH) (in case of two SC-FDMA symbols only) or sounding reference signal (SRS) transmission. With LTE-U, an UpPTS field can also be used for LTE-U channel reservation signal. A transmission of PRACH or SRS can be configured using higher layer signaling. By using proper configuration, the allocation of PRACH or SRS in UpPTS field can be avoided.

(5) Scheduling an Empty UL Subframe for Reservation Messages

In another embodiment, the eNB scheduler can avoid scheduling any UEs on a particular UL subframe (which may also contain UpPTS in the special subframe). The empty subframe can then be used for LTE-U channel reservation signal transmission. It can be more advantageous when only the DL is supported on the unlicensed carrier (such as control signals being sent over a licensed carrier). This method can be applicable both for TDD UL subframe and in an example of frequency division duplex (FDD) when LTE-U spectrum is used for UL transmission.

(6) Using SRS Symbols in UL for Reservation Messages

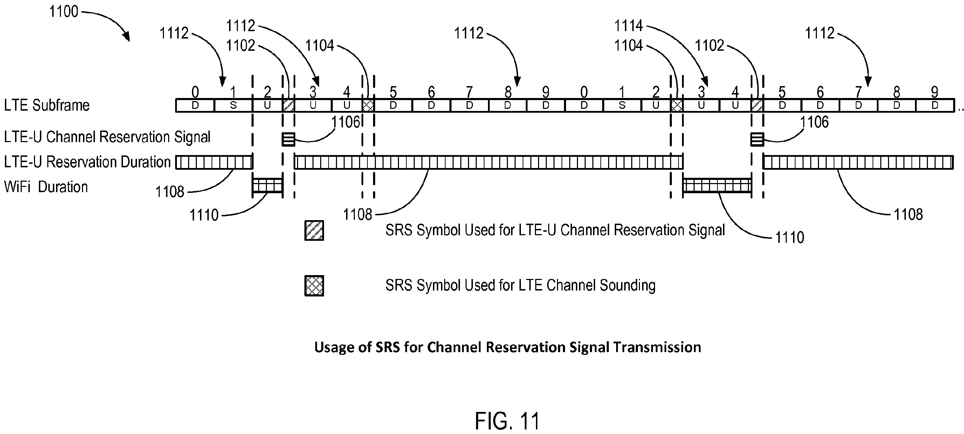

In one embodiment and as an alternative to method (5), an entire subframe is used for LTE-U channel reservation signal transmission (such as the last SC-OFDMA symbol of a UL subframe can be used for reservation signal transmission, see, e.g., Fig. 11). Unlike method (5), this method can improve resource utilization of LTE-U transmission.

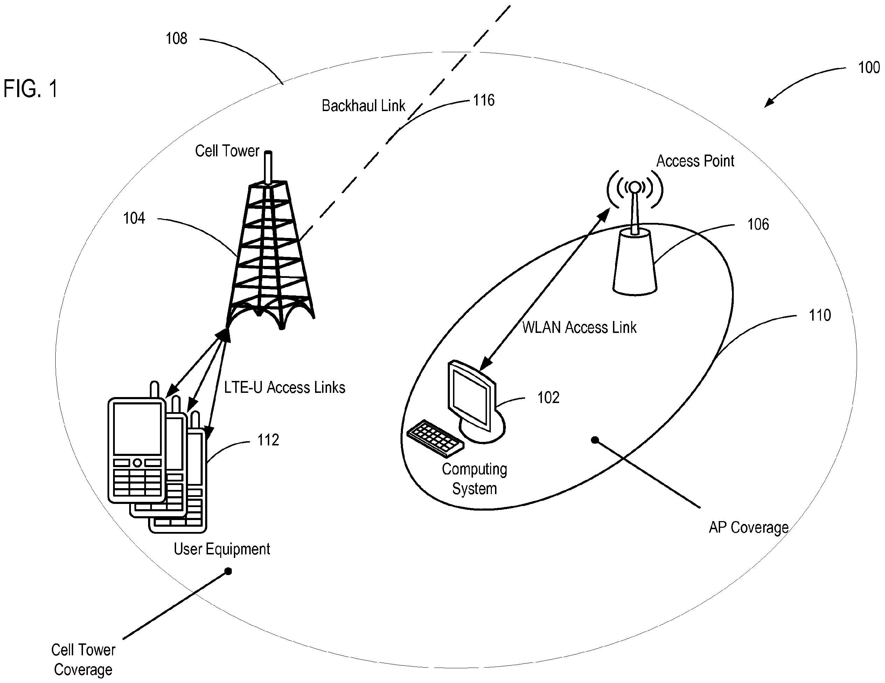

Turning to Fig. 1, a schematic diagram illustrating a system for channel reservation is shown. A portion of a radio access network (RAN) system 100 includes a cellular air interface (or medium, such as an LTE-U access link) provided between a cell tower 104 and UEs 112 (i.e., on LTE-U Access Link). A second air interface (e.g., a wireless local area network (WLAN) based interface) is being provided between an access point (AP) 106 and a computing system 102 (i.e., on WLAN Access Link). UEs 112 are located within a cell tower coverage 108. The computing system 102 is located within the cell tower coverage 108 and the AP coverage 110. A backhaul link 116 provides a network connection to a network such as an evolved packet core (EPC).

Wireless mobile communication technology uses various standards and protocols to transmit data between a base station and a wireless mobile device. Wireless communication system standards and protocols can include the Third Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard, which is commonly known to industry groups as Wi-Fi. Mobile broadband networks can include various high speed data technologies, such as 3GPP LTE systems. In 3GPP compatible radio access networks (RANs) in LTE systems (a 3GPP compatible protocol), the base station can include Evolved Universal Terrestrial Radio Access Network (E-UTRAN) Node Bs (also commonly denoted as evolved Node Bs, enhanced Node Bs, eNodeBs, or eNBs) and/or Radio Network Controllers (RNCs) in an E-UTRAN, which communicate with a wireless communication device, known as user equipment (UE).

UEs 112 can connect to the cell tower 104 through a single or multiple protocols. In some embodiments, UEs 112 connect to the cell tower 104 though a single LTE-U protocol. In other embodiments, UEs 112 can use multiple protocols, such as an LTE-U and an LTE/LTE-Advanced access link to connect with the cell tower 104. Multiple protocols allow supplemental behavior, such as a control signal being provided over LTE/LTE-Advanced with LTE-U providing a supplemental downlink. Other combinations are also possible.

In some embodiments LTE-U Access Link and WLAN Access Link (a non-3GPP compatible protocol) use a same band of frequencies. In other embodiments, LTE-U Access Link and WLAN Access Link use a same band of frequencies, while a second access link (not shown) use different frequencies (e.g., LTE licensed frequencies or LTE over mmWave) and different link technology (e.g., LTE and WLAN).

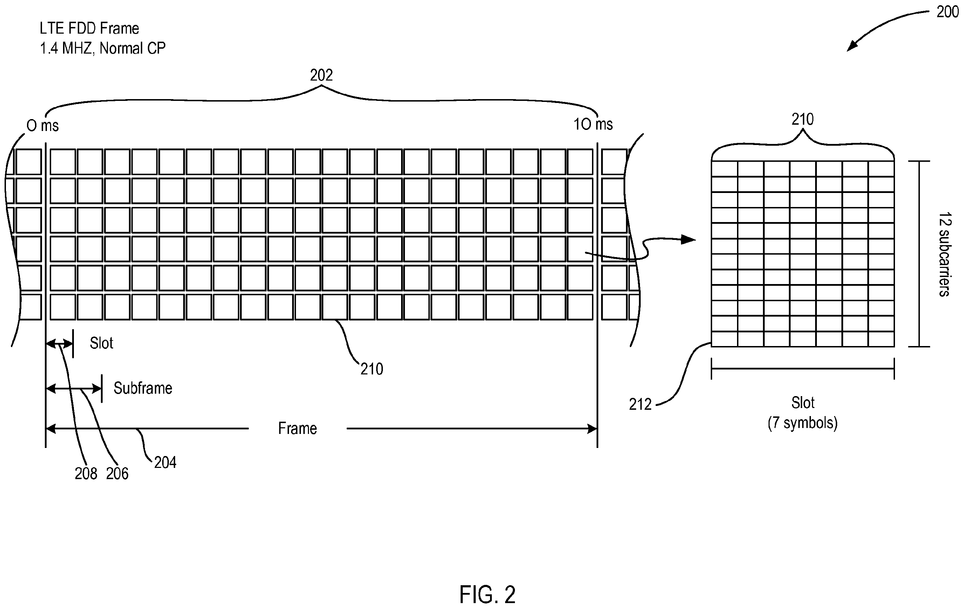

Fig. 2 is a schematic diagram 200 illustrating a long term evolution (LTE) communication frame 204 of a 10 ms duration 202. In one embodiment, each frequency allocation (carrier) can be in 108 kHz increments. In the diagram shown, a minimum of six carriers are shown. This allows for a bandwidth of 1.08 MHz (six carriers times 180 kHz = 1.08 MHz bandwidth). In some embodiments, the carriers can be expanded to 110 blocks (110 carriers times 180 kHz = 19.8 MHz). The frame 204 can be 10 ms with each slot 208 being 0.5 ms (and each subframe 206 being 1 ms).

The slot 208 at a carrier is a resource block 210, which includes seven symbols at 12 orthogonal frequency division multiplexing (OFDM) subcarriers. A resource element 212 is one OFDM subcarrier for the duration of one OFDM symbol. The resource block 210 can include 84 resource elements 212 when using a normal cyclic prefix (CP). OFDM spacing between individual subcarriers in LTE can be 15 kHz. A guard period of a CP can be used in the time domain to help prevent multipath inter-symbol interference (ISI) between subcarriers. The CP can be a guard period before each OFDM symbol in each subcarrier to prevent ISI (such as due to multipath).

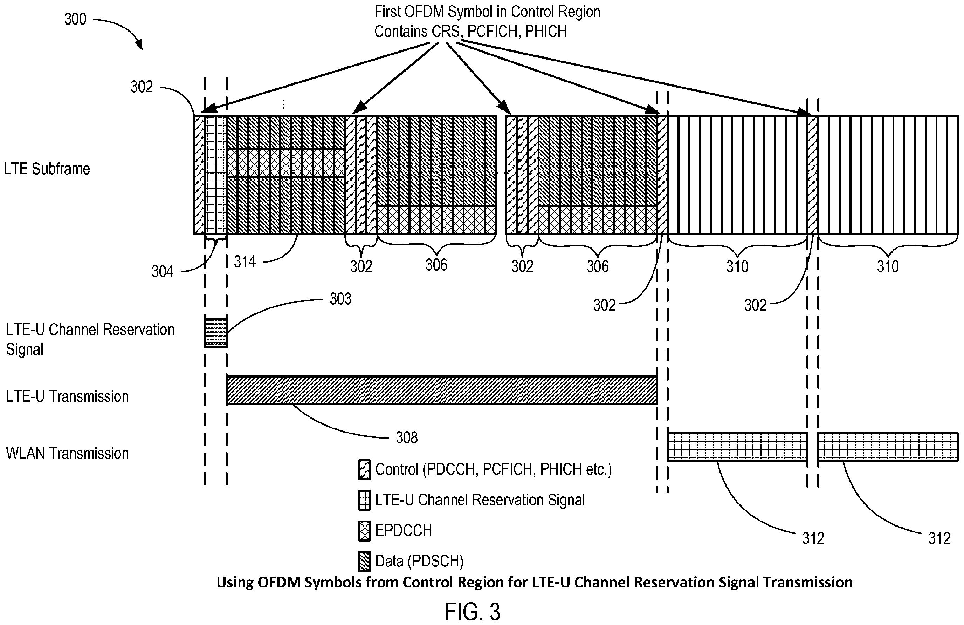

Fig. 3 is a graph of an LTE channel reservation communication 300. One or more control channel symbols (such as in a PDCCH 302 region) can be muted 304 to allow for transmission of an LTE reservation signal 303. An LTE-U transmission 308 can then occupy the reserved time of the medium. After the reserved time, portions of LTE subframes 310 can be muted to allow WLAN transmissions 312. However, some control signals (such as the PDCCH 302) may still be transmitted.

In one embodiment of an LTE subframe, the first one, two or three OFDM symbols 302 and 304 can be used for control signal transmission. A number of OFDM symbols used for the PDCCH 302 transmission can be dynamically varied on a per-subframe basis independently for each component carrier using PCFICH. PCFICH information is mapped to the first OFDM symbol 302 in the LTE subframe 300. By restricting the transmission of PDCCH 302 in one or two symbols of the PDCCH 302 region, the rest of the symbols 304 in the PDCCH 302 region can be used to transmit the LTE-U reservation signal 303.

Instead of the PDCCH 302, an enhanced physical downlink control channel (EPDCCH) 306 can be used for the control signal (e.g., PDCCH 302) transmission. If a serving cell is configured for the EPDCCH 306 transmission, the starting OFDM symbol for any EPDCCH 306 and PDSCH 314 scheduled by the EPDCCH 306 can be indicated semi-statically by the startSymbol field in EPDCCH-Config information element (IE) indicated by higher layer. The value of startSymbol can be 1, 2 and 3 for system bandwidth greater than 10 RBs. The first OFDM symbol in a subframe contains CRS, PCFICH and physical-hybrid-ARQ indicator channel (PHICH) and therefore cannot be used for the LTE-U reservation signal 303 transmission. However, the value of startSymbol can be set to 2 or 3. In such case symbol 2 and 3 can be used for the LTE-U reservation signal 303 transmission when two-port CRS is configured. In case of four-port CRS configuration, symbol 3 can be used for LTE-U reservation signal 303 transmission. One possible example of such transmission is presented in Fig. 3. When the unlicensed carrier is operated as a secondary carrier in the context of carrier aggregation, there is no need to transmit the PDCCH 302 for common search space (CSS) in the secondary carrier and downlink control information (DCI) for UE search space (USS) is transmitted by means of the EPDCCH 306 (i.e., in this scenario, for system, eNB, and UE perspectives, there will be no PDCCH 302 for CSS).

In one LTE-U deployment scenario, LTE-U is considered to be a secondary cross-carrier (CC), where the UE is also connected to a primary CC using licensed spectrum. Scheduling of PDSCH transmission on the secondary carrier can be performed using cross-carrier scheduling from the primary CC. In an embodiment of cross-carrier scheduling, a starting OFDM symbol of the SCell is indicated semi-statical|y using the pdsch-Start-r10 field in the CrossCarrierSchedulingConfig IE indicated by higher layer. A value of pdsch-Start-r10 can be 1, 2 and 3 for system bandwidth greater than 10 resource blocks (RBs). The first OFDM symbol in a subframe contains CRS, PCFICH and PHICH and therefore cannot be used for LTE-U reservation signal transmission. However, the value of pdsch-Start-r10 can be set to 2 or 3 (as shown in Fig. 3). In such case symbol 2 and 3 can be used for LTE-U reservation signal transmission when two-port CRS is configured. In case of four-port CRS configuration, symbol 3 can be used for LTE-U reservation signal transmission. Since the unlicensed carrier can be operated as a secondary carrier in the context of carrier aggregation, there is no need to transmit PDCCH for common search space (CSS) in the secondary carrier and DCI for UE search space (USS) is transmitted by means of cross-carrier scheduling (i.e., in this scenario, for system, eNB, and UE perspectives, there will be no PDCCH for CSS).

In some embodiments, this use of control channel symbols and cross carrier scheduling can be backwards compatible with legacy LTE specifications.

Fig. 4 is a graph of a modified LTE subframe 400. In one embodiment and to facilitate the transmission of LTE-U reservation signal, an existing LTE subframe can be modified (which, in some embodiments, may not be backwards compatible). For example, as shown in Fig. 4, a first few OFDM symbols 402 in the LTE subframe 400 can be reserved for LTE-U reservation signal transmission. The number of symbols n reserved for such transmission can be indicated by introducing a higher layer signaling parameter. An LTE-U UE will ignore the OFDM symbols 402 reserved for such LTE-U reservation signal transmission, and begin decoding the subframe from an n-th OFDM symbol (third OFDM symbol in Fig. 4 - e.g., the mPDDCH 404 region) containing an LTE transmission.

In some embodiments, a subframe can be divided into two parts: (a) a non-LTE transmission region 408 and (b) an LTE transmission region 410. In the non-LTE transmission region 408, non-LTE-U signaling can be used. An LTE-U reservation signal transmission can occur. In addition to LTE-U reservation signal transmission, such region can be left empty for WLAN transmission (e.g., can be used as muting gap).

The LTE transmission region 410 can be used for LTE transmission. Such region can further contain a modified PDCCH region (referred to as a mPDCCH region) and a modified PDSCH region (referred as mPDSCH region). mPDCCH 404 region is used for control signal transmission and an mPDSCH 406 region for data transmission. If n OFDM symbols are used for the non-LTE transmission region 408, then the LTE transmission region 410 is restricted to 14-n ODFM symbols for normal CP case (12-n OFDM symbols for extended CP case). Among these 14-n ODFM symbols, the first one, two or three symbols can be used for control signal transmission, which can be referred to as the mPDCCH 404 region. The rest of the signal can be used for data transmission and can be referred to as the mPDSCH region 406. Both the mPDCCH 404 region and the mPDSCH 406 region can include CRS with a time shift.

In some embodiments, when a non-LTE region is left empty, no LTE signals (including reference signals) are transmitted in this region. Existing CRS structure can be reused in an LTE region, with a time shift. In the example of Fig. 4, the CRS is shifted by two ODFM symbols.

Fig. 5 is a graph 500 illustrating an LTE transmission with a modified subframe structure, similar to the one described above and legacy subframe structure. In the embodiment shown, a combination of a modified subframe structure 510, a legacy subframe structure 512 and subframe level muting gaps 514 are utilized to facilitate coexistence of LTE-U and WLAN transmission. Whether a particular subframe is the modified subframe 510, the legacy subframe 512 or the muting gap 514, it can be semi-statically indicated by introducing new higher layer signaling.

For example, the modified subframe 510 can be used to introduce a reservation signal gap (a muting gap used for a reservation signal 502). During the reservation signal gap, an LTE-U channel reservation signal (such as a PLCP preamble or RTS/CTS message) can be broadcast to reserve the medium. Legacy subframes 512 can be used as part of an LTE transmission 504 during the reserved time duration. After the LTE transmission 504, subframe muting gaps 514 can be provided to allow WLAN transmissions 506.

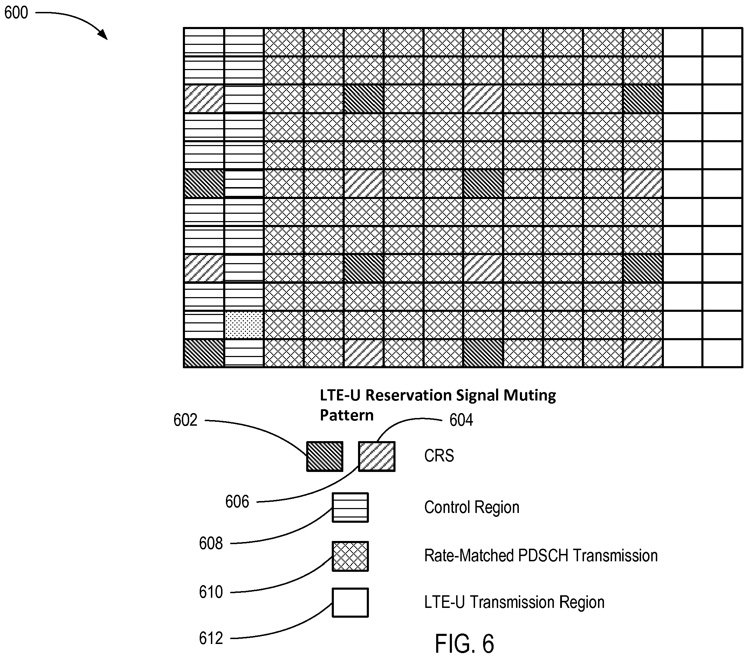

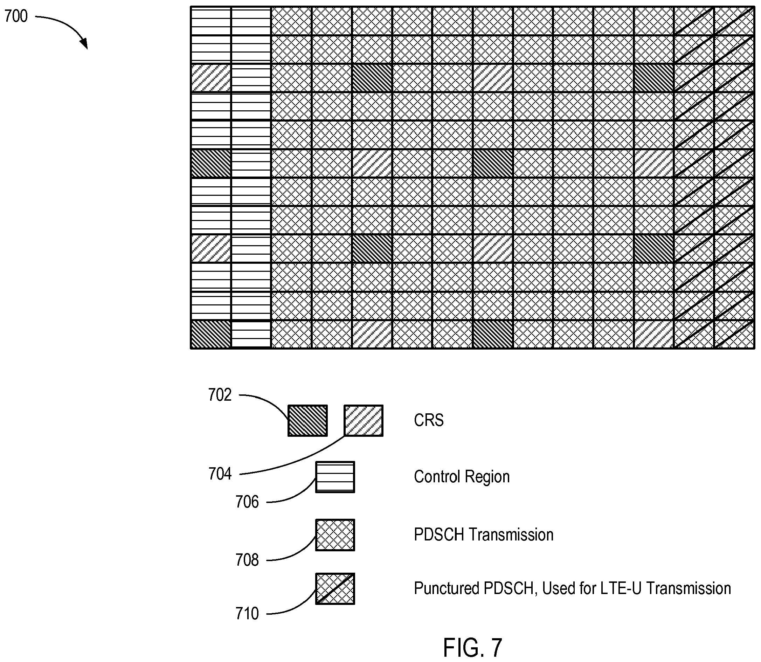

Figs. 6 and 7 show another embodiment of LTE-U reservation signal muting patterns. The patterns can be applicable for both legacy UEs as well as 3GPP Rel-13 (3GPP Release 13) and beyond UEs. A few symbols in a subframe can be left empty for reservation signal transmission. Figs. 6 and 7 show, respectively, the example of the usage of such LTE-U reservation signal muting pattern for Rel-13 of the LTE standard (3GPP Release 13) and beyond UEs and legacy UEs. In the examples shown, an X value discussed is given by two. In another expression for this example, a value of pdsch-end-r13 or ltesig-end-r13 is 11.

An LTE-U reservation muting symbol pattern indicator field can be used to indicate when the medium will be muted from use by an implementation of LTE-U protocol. Such muting symbol pattern can be pre-determined or indicated semi-statically by higher layer signaling.

In an embodiment, such muting pattern can indicate certain symbols in a subframe/frame to be used for LTE-U reservation signal transmission. An eNB or UE can refrain from LTE signal transmission on these symbols (i.e., transmission on these symbols will be muted for LTE-U signal). This muting can be achieved by using either puncturing of REs in the muting symbols or rate-matching around the REs in the muting symbols.

The term puncturing, as used herein (and seen in Fig. 7), may be described as when "signal B punctures signal A," then the REs of signal A that overlap with the REs of signal B are not mapped or transmitted, but the mapping index is still counted. For example, if the mapping elements of signal A are symbols a(0), ..., a(99) and those of signal B are b(10), ..., b(19), then symbols a(10) through a(19) are not mapped or transmitted. Rather, the transmitted signal is a(0), ..., a(9), b(10), ..., b(19), ..., a(20), ..., a(99) over a mapping index range of 0 to 99. Therefore, in the case of LTE-U reservation muting symbol pattern, the muting OFDM symbols 708 in a subframe is defined and then the PDSCH mapping is performed such that PDSCH symbols are not mapped to REs that belongs to the REs (710) corresponding to the muting OFDM symbols, but are mapped to REs 708 that do not overlap with the muting symbol region.

The term rate-matching, as used herein, may be described as when "signal A rate-matches signal B," then the REs of signal A that overlap with the REs of signal B are not mapped or transmitted at their mapping index, and the mapping index is not counted across the associated REs. For example, if the mapping elements of signal A are symbols a(0), ..., a(89) and those of signal B are b(10), ..., b(19), then symbols a(0) through a(9) are mapped to index range 0 to 9, symbols b(10) through b(19) are mapped to index range 10 to 19 and symbols a(10) through a(89) are mapped to index range 20 to 99. In other words, the transmitted signal is a(0), ..., a(9), b(10), ..., b(19), ..., a(10), ..., a(89) over a mapping index range of 0 to 99. With LTE-U reservation muting symbol rate-matching, the muting OFDM symbols in a subframe are defined and then the PDSCH symbols are mapped in sequence to the REs that are not part of the muting OFDM symbols.

In one embodiment, in case of Rel-13 LTE specification (3GPP Release 13) compatible (and/or beyond) UEs recognizing such muting symbol pattern, the PDSCH transmission on these subframes can be rate matched around these muted symbols. However, for legacy UEs not recognizing such pattern, the transmission of PDSCH in these symbols will be punctured. By properly placing such muting symbol, performance degradation for the legacy UEs can be reduced.

In some embodiments, the muted symbols can be defined as the OFDM symbols from the last OFDM symbol in a subframe. The last X OFDM symbols can be a beneficial location for the muted symbols for the backwards compatibility by minimizing the performance loss of a legacy UE. Since the RE mapping after channel coding and modulation is performed in a way of frequency first mapping (i.e., the bit stream or the corresponding modulated symbols will be mapped in the frequency domain first and then in the time domain), parity bits will be located in the last part of OFDM symbols within a subframe. Puncturing parity bits can have less performance degradation than puncturing systematic bits. For example, for 3GPP turbo coding, the encoded bits are arranged by systematic bits, parity bits 0, and parity bits 1. Last parity bits 0 or 1 are likely to be mapped to a last part of an OFDM symbol in a subframe with a proper channel coding rate (e.g., low channel coding rate). For TBCC (Tail Biting Convolutional Coding), the location of the muted symbols may not be affected much since all encoded bits are parity bits.

In an embodiment, a value X (zero or positive integer value) OFDM symbols from the last part can be defined for the muted symbols. A UE for LTE-U can utilize this information so that the proper rate matching can be performed. In another embodiment, to facilitate the backwards compatibility for previous releases of LTE compatible UEs (Rel-8 (3GPP Release 8)to Rel-12 of the LTE Specification (3GPP Release 12)), X can be 2 so that a last CRS symbol is not punctured to avoid the degradation of performance of channel estimation, RRM measurement, time/frequency tracking, etc.

As shown in Fig. 6 and to provide more flexibility for an eNB (or network), X value can be signaled via DCI contents from PDCCH, MAC CE, RRC signaling, or other protocol signaling. The X value can be represented by other means such as "Ending OFDM symbol for PDSCH or LTE signal transmission," which represents the last OFDM symbol index for PDSCH or LTE signal transmission. If the "Ending OFDM symbol" is signaled by higher layer signaling, it can be called pdsch-end-r13 or ltesig-end-r13.

In an embodiment, and based on considering the different RATs of LTE and WLAN, a centralized unit (e.g., a RCU - RAT Coordination Unit) manages the LTE and WLAN transmission by an eNB. A new protocol (e.g., LUP - LTE Unlicensed Protocol) is defined, which can be transparent to the eNB (e.g., the protocol can be recognized between the RCU and the UE).

With this backwards compatible approach, even legacy UE (with a proper RF chain enhancement to accommodate the unlicensed band) can access the unlicensed carrier with single carrier operation (i.e., without carrier aggregation).

Fig. 8A is a diagram illustrating an LTE frequency division duplex (FDD) frame consistent with embodiments disclosed herein. In an FDD frame, upload subframes 806 are on a different carrier (frequency) than download frames 804. In an FDD frame, CRS is transmitted in every subframe, except in the MBSFN region of the MBSFN subframes. PSS and SSS are transmitted in subframes 0 and 5. PBCH is transmitted in subframe 0. SIB-1 is transmitted on subframe 5 on systems frame number (SFN) satisfying the condition where SFN mod 2 = 0 (i.e., every other frame). Paging occurs in subframes 0, 4, 5 and 9 on frames satisfying the equation SFN mod T, where T is the DRX cycle of the UE. In MBSFN subframes, a first one or two symbols are used as non-MBSFN region. CRS is transmitted on the first symbol of non-MBSFN region of an MBSFN subframe.

Fig. 8B is a diagram illustrating an LTE time division duplex (TDD) frame consistent with embodiments disclosed herein. In the example shown in a TDD frame, both upload and download operations share a carrier (frequency). Between a transition from download subframes 808 to upload subframes 810 is special a subframe 818. The special subframe 818 includes a DwPTS 812, a guard period (GP) 814 and an uplink pilot time slot (UpPTS) 816. In a TDD frame, CRS is transmitted in every downlink subframe, except in the MBSFN region of the MBSFN subframes. PSS are transmitted on subframes 0 and 5. SSS are transmitted in subframes 1 and 6. Physical broadcast channel (PBCH) is transmitted in subframe 0. System information block (SIB)-1 is transmitted on subframe 5 on systems frame number (SFN) satisfying the condition, where SFN mod 2 = 0 (i.e., every other frame). Paging in subframes 0, 1, 5 and 6 on frame satisfying the equation SFN mod T, where T is the discontinuous reception (DRX) cycle of the UE. In an MBSFN subframe, a first one or two symbols are used as non-MBSFN regions. CRS is transmitted on the first symbol of non-MBSFN region of an MBSFN subframe. Subframes 3, 7, 8, and 9 can be configured as MBSFN subframe for TDD.

In some embodiments, the TDD UpPTS field can be used for a reservation message. For example, a length of UpPTS field is limited to one or two SC-FDMA symbols. The UpPTS field is not used for UL Data transmission. Generally, the use of this field is limited to PRACH (in case of two SC-FDMA symbols only) or SRS transmission. In case of LTE-U, the UpPTS field can also be used for LTE-U channel reservation signal. The transmission of PRACH or SRS is to be configured using higher layer signaling. By using proper configuration, the allocation of PRACH or SRS in UpPTS field can be avoided.

Alternatively, a combination of GP and UpPTS can be used for LTE-U channel reservation signal.

An eNB scheduler can choose to not schedule any UEs on a particular UL subframe which may also contain UpPTS in the special subframe. The empty subframe can then be used for LTE-U channel reservation signal transmission. It is more advantageous when only the DL is supported on the unlicensed carrier. This method is applicable both for TDD UL subframe and in case of FDD if LTE-U spectrum is used for UL transmission.

Fig. 9 is a graph of LTE-U transmissions that include a guard period (GP) 904, a portion of which can be used to transmit a reservation signal. In a TDD system, UL is silent 902 during DL transmissions 908 and DL is silent 902 during UL transmissions 906. In one embodiment using TDD transmission, the GP field between DwPTS and UpPTS in special subframe (see, e.g., Fig. 8B) is unused by LTE transmission. In a TDD system, a GP can be used for two reasons. First, a GP is used to allow for DL to UL switching for the transition time for RF circuitries of eNB and UE. Second, GP is used to accommodate a timing advance from a UE and to consider different UEs having the large value of timing advance. The GP can be designed to cover an LTE cell radius of up to 100 km. In Table 2, a duration of GP for different UL-DL configurations is shown.

**Table 2 - Duration of GP for Different Configurations**

| Special Subframe Configuration | GP Duration (microseconds) | | | |
|---|---|---|---|---|
| | Normal CP in DL | | Extended CP in DL | |
| | Normal CP in UL | Extended CP in UL | Normal CP in UL | Extended CP in UL |
| 0 | 714.06 | 702.08 | 678.65 | 666.67 |
| 1 | 285.42 | 273.44 | 261.98 | 250.00 |
| 2 | 214.06 | 202.08 | 178.65 | 166.67 |
| 3 | 142.71 | 130.73 | 95.31 | 83.33 |
| 4 | 71.35 | 59.38 | 607.29 | 583.33 |

(continued)

| Special Subframe Configuration | GP Duration (microseconds) | | | |
|---|---|---|---|---|
| | Normal CP in DL | | Extended CP in DL | |
| | Normal CP in UL | Extended CP in UL | Normal CP in UL | Extended CP in UL |
| 5 | 642.71 | 642.71 | 190.63 | 166.67 |
| 6 | 214.06 | 214.06 | 107.29 | 83.33 |
| 7 | 142.71 | 142.71 | 440.63 | 416.67 |
| 8 | 71.35 | 71.35 | - | - |
| 9 | 428.65 | 428.65 | - | - |

Part of this GP duration can be used for LTE-U reservation signal transmission. In an embodiment, a deployment scenario for LTE-U is as a secondary small cell (i.e., femto or pico deployment with relatively stationary UEs). A timing advance value needed in the uplink is typically low. In contrast to a large LTE cell radius coverage of up to 100 km, a typical radius of small cells is in the order of 100 m. A timing advance value of a fraction of $\mu$s to a few $\mu$s (e.g. 0.1 $\mu$s to 5 $\mu$s) is typically all that is needed for such small cell scenarios.

From Fig. 5, the GP duration available for LTE-U channel reservation signal transmission, $T_{WLAN}$ can be expressed as follows:

$$T_{WLAN} = T_{GP} - max\{T_{p1}, ..., T_{pn}\} - T_{DL-UL}$$

A DL-UL switching offset ($T_{DL-UL}$) of around 20 $\mu$s is used for TDD transmission. As discussed earlier, the timing advance value of few $\mu$s will be required for the considered deployment scenario. Therefore, a large part of the GP can be used for LTE-U channel reservation signal transmission. As can be observed from Table 2, the PLCP preamble based LTE-U channel reservation signal can be fitted into special subframe configurations. However, not every special subframe configuration GP can be used for joint RTS/CTS type LTE-U channel reservation signal, e.g., special subframe configuration 4 with normal CP has a GP duration of 71.35 $\mu$s, which may not fit the RTS/CTS time requirement of 112 $\mu$s with BPSK, one-half rate transmission. Depending on the special subframe configuration, different LTE-U channel reservation technics can be used.

An example of periodicity of GP for various UL-DL configurations is provided in Table 3. If PLCP preamble based channel reservation signal is used for UL-DL configurations 3, 4 and 5, only a first 5 ms of a 10 ms duration can be reserved for LTE-U transmission.

**Table 3 - Uplink-Downlink Configurations and GP Periodicity**

| Uplink-Downlink Configuration | GP Periodicity (ms) |
|---|---|
| 0 | 5 |
| 1 | 5 |
| 2 | 5 |
| 3 | 10 |
| 4 | 10 |
| 5 | 10 |
| 6 | 5 |

Fig. 10 is a graph of example of using GP for LTE-U channel reservation. In the embodiment shown, an LTE-U channel reservation signal 1008 is transmitted during a GP 1004 of special subframe (subframe 1). Normal subframes 2-7 (1006) can be used for LTE transmissions during the LTE-U reservation duration 1010. The reservation can also be repeated for remaining time during the LTE-U transmission as shown in subframe 6.

Two examples of WLAN transmission duration are shown (1012 and 1014). In one embodiment represented by WLAN duration 1 (1012), DL transmission uses the existing LTE design (i.e., CRS and other periodic signal transmission are unchanged in LTE-U). In such a use case, using DL subframe for WLAN transmission may not be possible. In another embodiment represented by WLAN duration 2, an enhanced downlink transmission for LTE-U is shown. Such enhanced transmission may involve CRS free transmission, small cell on/off feature, etc.

Fig. 11 is a graph of example of using an SRS symbol for LTE-U channel reservation consistent with embodiments disclosed herein. As an alternative to when an entire subframe is used for an LTE-U channel reservation signal 1106 transmission, the last SC-OFDMA symbol of an UL subframe can be used for reservation signal transmission. Unlike method (5) (as noted above), this method can improve resource utilization of LTE-U transmission. For example, an SRS symbol 1102 in frame 2 can be used for broadcasting an LTE-U channel reservation message. LTE protocol transmissions can continue through normal subframes 1112 during an LTE channel reservation duration 1108. Later SRS symbols 1104 during the reservation can be used for LTE channel sounding. WLAN transmissions 1110 can occur after the LTE channel reservation duration 1108 and before the next LTE channel reservation signal 1106. LTE subframes 1114 can be muted between the LTE channel reservation duration 1108 and the next LTE channel reservation signal 1106.

In LTE, the last SC-OFDMA symbol in FDD UL or TDD UL subframe can be configured for transmitting SRS signals. Cell specific SRS configuration is provided using SIB2 message by setting proper value of configuration parameters srs-SubfrarneConfig, srs-BandwidthConfig etc. UE specific SRS configuration is provided in RRC configuration/reconfiguration messages by setting proper values of configuration parameters srs-Bandwidth, srs-ConfigIndex, etc.

In one embodiment and by setting proper values of the parameters (e.g., srs-SubframeConfig, srs-BandwidthConfig, etc.) more frequent SRS allocation can be achieved. UEs will not transmit PUSCH on symbols configured for SRS. In addition, shortened PUCCH format can be configured. By setting proper values for parameters (e.g., srs-Bandwidth, srs-ConfigIndex, etc.) some of the SRS SC-FDMA symbols can be left unused. These unused SRS symbols can then be used for LTE-U channel reservation signal.

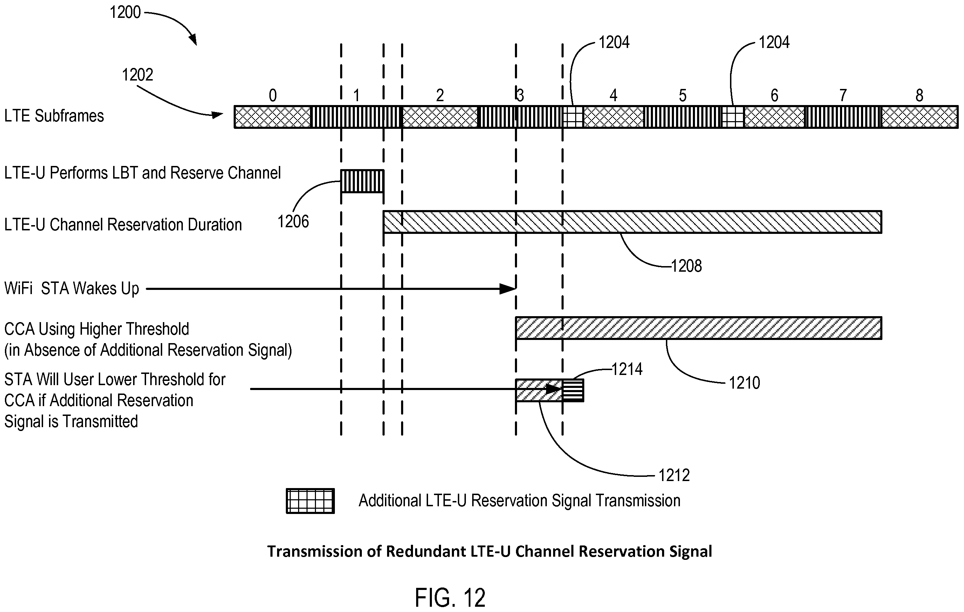

Fig. 12 is a graph of example of transmitting a redundant channel reservation consistent with embodiments disclosed herein. In the embodiment shown, an LTE-U eNB performs listen before transmit (LBT, which is also referred to as listen before talk) to sense an empty channel and then reserves the channel for LTE-U transmission using an LTE-U channel reservation signal 1206 as part of LTE-U subframes 1202. WLAN STAs and APs, upon hearing the channel reservation signal, will update their NAVs and will refrain from accessing the medium during an LTE-U transmission duration 1208. However, STAs in sleep mode during LTE-U channel reservation signal transmission may not be able to update their NAVs. If such STA wakes up in the middle of LTE-U transmission, and tries to access the medium, it may employ a higher threshold value for a higher threshold duration 1210, since it cannot detect any WLAN OFDM preamble during LTE-U transmission. As a result of using a higher threshold value (e.g., -62 dBm in case of 802.11 n/ac), the STA may not be able to detect the LTE-U transmission and may attempt to access the medium. However, if on the other hand, an additional redundant LTE-U channel reservation signal 1204 is transmitted during the LTE-U transmission, the STA will be able to detect WLAN OFDM preamble (detection occurring during a duration 1214) and as a result will use the lower threshold value (e.g. -82 dBm in case of 802.11 n/ac) after a short duration 1212 of using a higher threshold value. This can prevent the STA from accessing the medium and avoid interfering with the LTE-U transmission.

The number or frequency of the redundant LTE-U channel reservation signal transmission can be dynamically configured based on the load the medium. Alternatively, such signal can be transmitted periodically. One example of such transmission is shown in Fig. 7.

In another embodiment, the LTE-U eNB can choose to access the medium at predefined time point without using LBT protocol. The eNB access time can be coordinated with a WLAN beacon interval to reduce the possibility of collisions with WLAN transmission. Redundant transmission of LTE-U channel reservation signal during LTE-U transmission duration can help STAs to determine that medium is busy, and hence STAs will refrain from transmission.

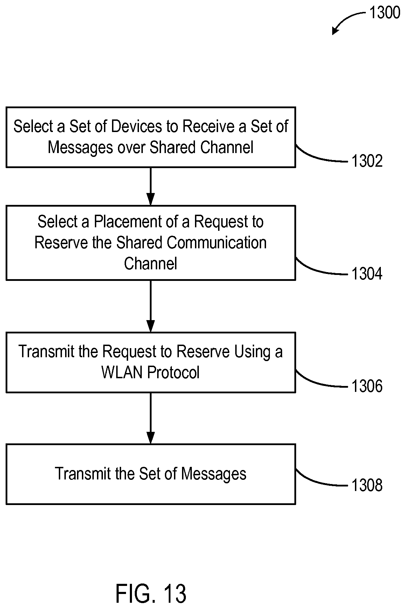

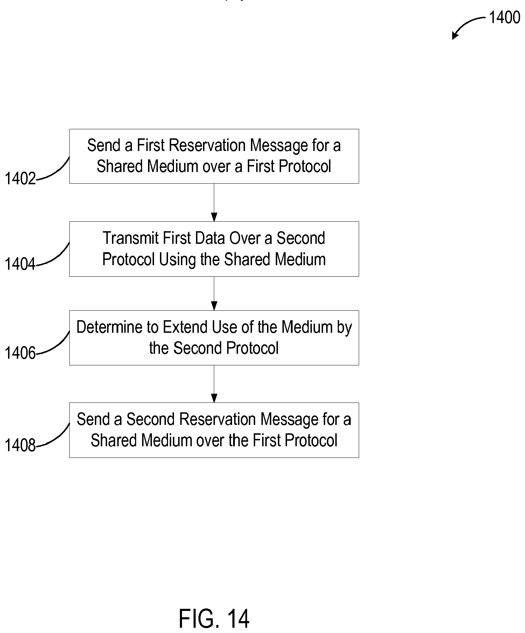

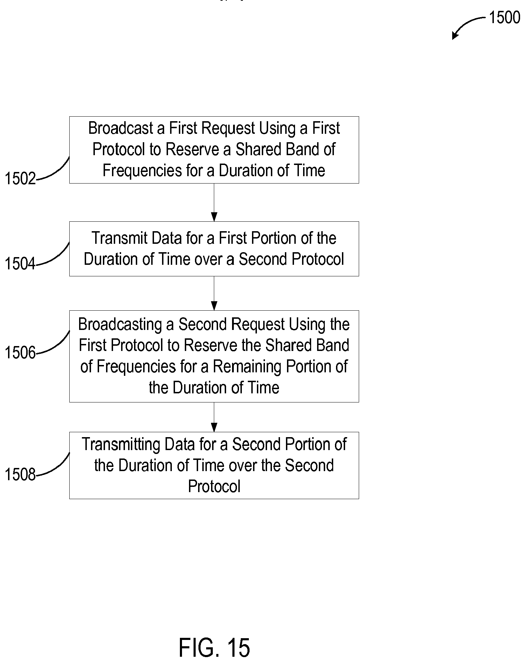

Figs. 13 to 15 show methods of reserving a shared medium. Fig. 13 shows an embodiment that initially reserves a medium. Fig. 14 shows an embodiment that extends a reservation. Fig. 15 shows a duplicate reservation message being sent (which can aid STAs that missed the first reservation message, such as STAs that were in a low power state).

Fig. 13 is a flow chart illustrating a method 1300 for channel reservation consistent with embodiments disclosed herein. The method 1300 can be accomplished by systems such as those shown in Fig. 1, including UEs 112, the cell tower 104, the AP 108 and the computing system 102. In box 1302, an eNB selects a set of devices to receive a set of messages over a shared channel (such as unlicensed spectrum). In box 1304, the eNB selects a placement of a request to reserve the shared communication channel (such as (1) from a control channel region of LTE-U, (2) from a muting gap indicated by a reservation muting symbol pattern indicator, (3) from a time division duplex (TDD) guard period (GP), (4) from a TDD uplink pilot time slot (UpPTS), (5) from an empty uplink (UL) subframe or (6) from a sounding reference signal (SRS)). In box 1306, the eNB (or a UE, if requested) sends a request to reserve the shared communication channel using a WLAN protocol. In box 1308, the eNB then transmits the set of messages over the shared channel.

Fig. 14 is a flow chart illustrating a method 1400 for a duplicate channel reservation consistent with embodiments disclosed herein. The method 1400 can be accomplished by systems such as those shown in Fig. 1, including UEs 112, the cell tower 104, the AP 108 and the computing system 102. In box 1402, the eNB sends a first reservation message for a shared medium over a first protocol (such as WLAN). In box 1404, the eNB transmits first data over a second protocol (such as LTE-U) using the shared medium. In box 1406, the eNB determines to extend use of the shared medium by the second protocol. In box 1408, the eNB sends a second reservation message for the shared medium over the first protocol to further reserve the medium for an extended duration.

Fig. 15 is a flow chart illustrating a method 1500 for extending a channel reservation consistent with embodiments disclosed herein. The method 1500 can be accomplished by systems such as those shown in Fig. 1, including UEs 112, the cell tower 104, the AP 108 and the computing system 102. In box 1502, an eNB broadcasts a first request using a first protocol (such as WLAN) to reserve a shared band of frequencies for a duration of time. In box 1504, the eNB transmits data for a first portion of the duration of time over a second protocol (such as LTE-U). In box 1506, the eNB broadcasts a second request using the first protocol to reserve the shared band of frequencies for a remaining portion of the duration of time (which can help silence STAs that missed the first reservation message). In box 1508, the eNB transmits data for a second portion of the duration of time over the second protocol.

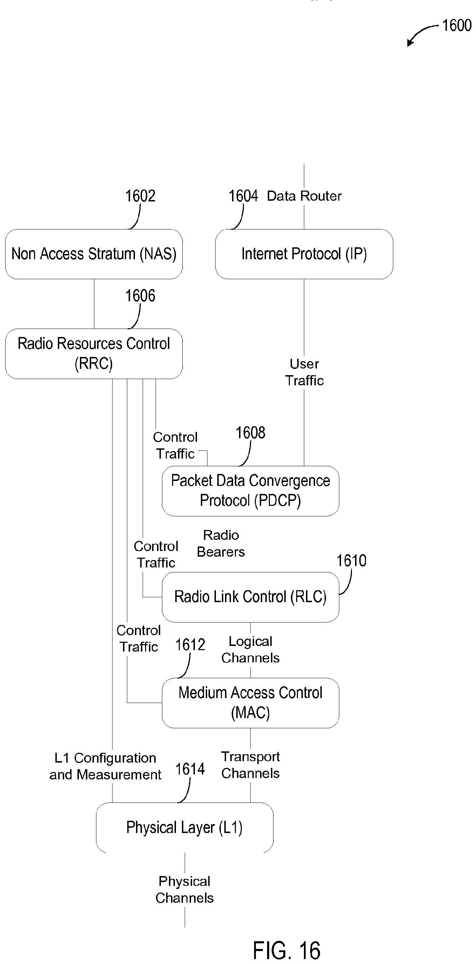

Various embodiments described herein can also be used to expand, update, use and/or provide new functionality to existing wireless systems (e.g., RATs, RANs, UTRAN, EUTRAN, etc.). In Fig. 16, an example of an enhanced LTE protocol stack 1600 for a UE is shown. In some embodiments, the enhanced LTE protocol stack 1600 can be enhanced with new messages and measurements for use in the LTE-U protocol as described above.

The stack describes protocol layers in the enhanced LTE protocol stack 1600. These layers can provide abstraction from a lower layer (represented as a layer closer to the bottom of the page). A physical layer (L1) 1614 includes systems that translate physical signals into logical data for use by the higher layers. L1 can also provide measurement and configuration services to a radio resource control (RRC) layer 1606. A medium access control (MAC) layer 1612 includes systems that perform transport as logical mapping and/or scheduling. The MAC layer 1612 includes systems that can provide format selection and measurements about the network to the RRC layer 1606. A radio link control (RLC) layer 1610 includes systems that provide segmentation, concatenation and reassembly, and can operate in different modes depending on a radio bearer. A packet data convergence protocol (PDCP) layer 1608 includes systems that can provide services for higher level protocols including cryptographic functions, header compression/decompression, sequence numbering and/or duplicate removal. User traffic can be sent through the PDCP layer 1608 to an internet protocol (IP) layer 1604, which is then routed to applications and systems of the UE for use. Control traffic can be sent to the RRC layer 1606. The RRC layer 1606 can provide management and control functions of the UE. The RRC layer 1606 functionality can include processing of broadcast information, paging, connection management with an eNB, integrity protection of RRC messages, radio bearer control, mobility functions, UE measurement and reporting, Quality of Service management, etc. A non-access stratum (NAS) layer 1602 includes systems that can provide mobility management, call control, session management and/or identity management.

The LTE protocol described above can be enhanced to provide different types (or granularities) of muting gaps as shown in Figs. 17A, 17B, 17C. It should be recognized that patterns shown in Figs. 17A, 17B, 17C are examples and other patterns can be used.

For example, Fig. 17A shows a diagram of a subframe muting gap. In the Fig. subframes 0 and 1 (1702a) and 6 and 7 (1702b) are muted to allow for WLAN transmissions. Subframes 1704 can be used for LTE transmissions. In each frame, these subframes 1702a and 1702b can be reserved by the LTE protocol such that WLAN transmissions can occur. These subframes 1702a and 1702b can be reserved by carrier, across multiple carriers or across all carriers. In some embodiments, an eNB can detect which WLAN channels are in use and insert muting gaps only in the carriers covered by the WLAN channels. In muted subframes 1702a and 1702b, eNB and UEs refrain from transmission allowing other radio access technologies (RATs) to perform one or more operations. In some embodiments, muting gaps can provide additional power savings over transmissions without muting gaps. As a UE does not need to scan the medium during muting gaps, UE can transition to a lower power state by powering down medium transmitters and/or receivers during muting gaps.

Subframes selected for muting can be statically selected or dynamically selected. In one embodiment, a number and/or location of subframes can be indicated by higher layer signaling. For example, subframe muting can be one muted subframe for every 10 subframes or even one muted subframe for every 100 subframes. Other lesser, greater or in between combinations are also possible.

During frames outside of muted subframes (also known as unmuted subframes), eNB and/or UEs can transmit signals. However, this does not necessarily indicate that LTE will not use any listen-before-talk (LBT) mechanisms in this region. For example, two embodiments can include: (1) LTE will not use LBT mechanisms and will transmit whether or not transmission of other RATs are in process; or (2) LTE uses an LBT mechanism before transmitting. With regard to embodiment (1), and in some embodiments, an eNB uses a higher transmission power which can be detected over smaller WLAN transmissions.

For example with regard to embodiment (2), during muting gaps LTE-U devices (e.g., eNB, UE) do not transmit and do not expect to receive any transmission. An LTE system can gain additional benefits of power saving by shutting down transmitters and/or receivers during muting gaps. During the unmuted times, an eNB performs LBT and/or channel reservation mechanism to reserve the channel. Once the channel is reserved/access, eNB and UE can transmit and receive data using the unlicensed band. A UE scans the channel during the unmuted portion of the frame structure, regardless of whether eNB is transmitting or not.

In another example, Fig. 17B shows a diagram of a frame muting gap. In the example shown, frames 1 (1708a) and 12 (1708b) of a 16-frame pattern are reserved and no LTE transmissions occur. LTE transmissions, instead, occur during frames 1706. These reserved frames 1708a and 1708b can be reserved by carrier, across multiple carriers or across all carriers. In some embodiments, an eNB can detect which WLAN channels are in use and insert muting gaps only in the carriers covered by the WLAN channels. It should be recognized that the above discussion about subframe muting gap configuration including power savings, dynamic and static allocation and LBT mechanisms can be applied to frame level muting.

In yet another example, Fig. 17C shows a diagram of a symbol muting gap. In the example shown, a dynamic muting gap is shown at a symbol level in a set of resource blocks. In a first block, symbols 3 to 13 (1712a) are provided as a muting gap. In a next block, no symbols are provided as a muting gap. In an n-th block, a muting gap is formed from symbol 0 (1712b) and symbols 8 to 13 (1712c). Symbols 1710 can, instead, be used for LTE transmissions. This dynamic nature can be based on traffic buffered by the eNB for transmission over LTE-U. During high periods of traffic, the eNB can suspend some or all of muting gaps. During low periods of traffic, the eNB can reserve larger numbers of symbols for muting gaps.

It should be recognized that these examples can be modified and/or combined. In some embodiments, the selection of timing for a muting gap can be static or dynamic for muting gap selection (including subframe, frame or symbol level gaps). With a static muting gap, the muting gap pattern can repeat. In a dynamic muting gap, muting gaps can be adjusted (e.g., larger, smaller, more frequent, less frequent, etc.) depending on traffic. The traffic can be measured in terms of LTE-U traffic and/or WLAN traffic.

In one embodiment, a muting gap can be aligned with a beacon period used in WLAN protocols. In one example, when WLAN AP uses a beacon period of 102.4 ms, LTE-U can choose to use $n$ (an integer) consecutive subframes on frame 0, 10, 20, 30 starting at subframe 1,3,5,8, etc. as coexistence muting gap subframes. In this example, $n$ is an integer the value of which can depend on the traffic load of the WLAN and LTE network. In another example, the muting can start from a second slot in a subframe or from an $l$-th symbol position in a subframe to have better alignment with the beacons. In Figs. 17A, 17B, 17C, examples of subframe level, frame level and symbol level coexistence muting gap are shown.

For the examples of subframe level muting, an example of a design can include a small cell on/off mechanism. The design can support fast on/off switching for certain target subframes in order to achieve better performance by reducing the interference (e.g., between LTE/WLAN or LTE/LTE).

Based on the above discussion, it is noted that LTE-U channel reservation signals can be applied to different granularity of coexistence muting gaps. PLCP preamble based LTE-U channel reservation signal can be more suitable to finer granularity (e.g., symbol/slot/subframe level coexistence muting gaps). RTS-CTS based technique can be more suitable to larger granularity (e.g., frame level coexistence muting gaps).

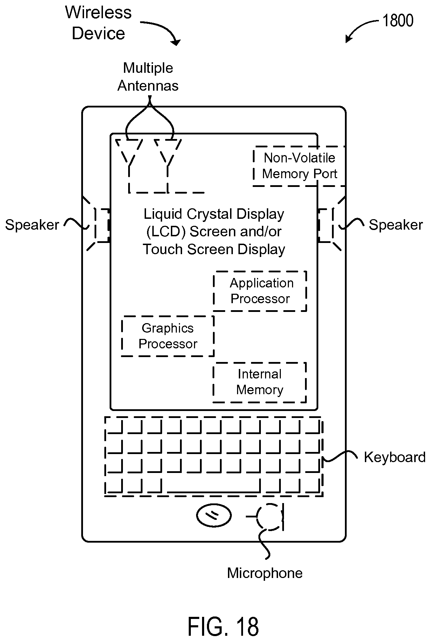

Fig. 18 is an example illustration of a mobile device, such as a UE, a mobile station (MS), a mobile wireless device, a mobile communication device, a tablet, a handset, or another type of mobile wireless device. The mobile device can include one or more antennas configured to communicate with a transmission station, such as a base station (BS), an eNB, a base band unit (BBU), a remote radio head (RRH), a remote radio equipment (RRE), a relay station (RS), a radio equipment (RE), or another type of wireless wide area network (WWAN) access point. The mobile device can be configured to communicate using at least one wireless communication standard including 3GPP LTE, WiMAX, HSPA, Bluetooth, and Wi-Fi. The mobile device can communicate using separate antennas for each wireless communication standard or shared antennas for multiple wireless communication standards. The mobile device can communicate in a WLAN, a wireless personal area network (WPAN), and/or a WWAN.

Fig. 18 also provides an illustration of a microphone and one or more speakers that can be used for audio input and output from the mobile device. The display screen can be a liquid crystal display (LCD) screen or other type of display screen, such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the mobile device. A keyboard can be integrated with the mobile device or wirelessly connected to the mobile device to provide additional user input. A virtual keyboard can also be provided using the touch screen.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell®, Microsoft®, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Various techniques, or certain aspects or portions thereof, may take the form of program code (i.e., instructions) embodied in tangible media, such as floppy diskettes, CD-ROMs, hard drives, magnetic or optical cards, solid-state memory devices, a non-transitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or an interpreted language, and combined with hardware implementations.

Each computer system includes one or more processors and/or memory; computer systems may also include various input devices and/or output devices. The processor may include a general purpose device, such as an Intel®, an AMD®, or other "off-the-shelf" microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described will be illustrated as software modules or components. As used herein, a software module or component may include any type of computer instruction or computer-executable code located within a memory device. A software module may, for instance, include one or more physical or logical blocks of computer instructions, which may be organized as a routine, a program, an object, a component, a data structure, etc. that performs one or more tasks or implements particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

Reference throughout this specification to "an example" means that a particular feature, structure, or characteristic described in connection with the example is included in at least one embodiment of the present invention. Thus, appearances of the phrase "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of materials, frequencies, sizes, lengths, widths, shapes, etc., to provide a thorough understanding of embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

Although the foregoing has been described in some detail for purposes of clarity, it will be apparent that certain changes and modifications may be made without departing from the principles thereof. It should be noted that there are many alternative ways of implementing both the processes and apparatuses described herein.

Those having skill in the art will appreciate that many changes may be made to the details of the above-described embodiments without departing from the underlying principles of the invention. The scope of the present invention should, therefore, be determined only by the following claims.

## Claims

1. An eNB for sharing unlicensed spectrum comprising:
   a processor configured to:

   select (1302) a set of licensed assisted access compatible devices that will receive a set of messages over a shared communication channel;
   select (1304) a placement of a request to reserve the shared communication channel within a 3GPP compatible licensed assisted access protocol;
   transmit (1306) the request to reserve the shared communication channel using protocol recognized by one or more radio access networks in the unlicensed spectrum; and
   transmit (1308), using the 3GPP compatible licensed assisted access protocol over the shared communication channel, the set of messages.

**2.** The eNB of claim 1, wherein the one or more RANs comprises a wireless local area network.

**3.** The eNB of claim 2, wherein the processor is further configured to configure a timing within the 3GPP compatible licensed assisted access protocol to transmit the request to reserve the shared communication channel.

**4.** The eNB of claim 3, wherein to configure the timing within the 3GPP compatible licensed assisted access protocol further comprises to select one or more control channel symbols to use to transmit the request to reserve the shared communication channel.

**5.** The eNB of claim 3, wherein to configure the timing within the 3GPP compatible licensed assisted access protocol further comprises to provide a reservation muting symbol pattern indicator to licensed assisted access compatible devices that describe availability of the shared communication channel for transmitting the request to reserve.

**6.** The eNB of claim 3, wherein to configure the timing within the 3GPP compatible licensed assisted access protocol further comprises to configure the eNB to use a portion of TDD guard period to transmit the request to reserve.

**7.** The eNB of claim 3, wherein to configure the timing within the 3GPP compatible licensed assisted access protocol further comprises to configure the eNB to use a TDD uplink pilot time slot field to transmit the request to reserve.

**8.** The eNB of claim 3, wherein to configure the timing within the 3GPP compatible licensed assisted access protocol further comprises to configure the eNB to schedule an empty uplink subframe to transmit the request to reserve.

**9.** The eNB of claim 3, wherein to configure the timing within the 3GPP compatible licensed assisted access protocol further comprises to configure the eNB to reserve one or more sounding reference symbols in uplink to transmit the request to reserve.

**10.** A method for sharing unlicensed spectrum comprising the following steps performed by an eNB:

selecting (1302) a set of licensed assisted access compatible devices that will receive a set of messages over a shared communication channel;
selecting (1304) a placement of a request to reserve the shared communication channel within a 3GPP compatible licensed assisted access protocol;
transmitting (1306) the request to reserve the shared communication channel using protocol recognized by one or more radio access networks in the unlicensed spectrum; and
transmitting (1308), using the 3GPP compatible licensed assisted access protocol over the shared communication channel, the set of messages.

**11.** The method according to claim 10, wherein the one or more radio access networks comprises a wireless local area network.

**12.** The method according to claim 11, the method further comprising:

configuring a timing within the 3GPP compatible licensed assisted access protocol to transmit the request to reserve the shared communication channel.

**13.** The method according to claim 12, wherein configuring the timing within the 3GPP compatible licensed assisted access protocol further comprises selecting one or more control channel symbols to use to transmit the request to reserve the shared communication channel, or further comprises providing a reservation muting symbol pattern indicator to licensed assisted access compatible devices that describe availability of the shared communication channel for transmitting the request to reserve, or further comprises configuring the eNB to use a portion of TDD guard period to transmit the request to reserve, or further comprises configuring the eNB to use a TDD uplink pilot time slot field to transmit the request to reserve, or further comprises configuring the eNB to schedule an empty uplink subframe to transmit the request to reserve, or further comprises configuring the eNB to reserve one or more sounding reference symbols in UL to transmit the request to reserve.

**14.** Machine readable storage storing instructions that when executed on an eNB, cause the eNB to perform the steps of the method of any of claims 10-13.

# EP 3 100 508 B1

**Patentansprüche**

1. eNB zum Teilen eines unlizenzierten Spektrums, umfassend:
   einen Prozessor, der zu Folgendem konfiguriert ist:

   Auswählen (1302) eines Satzes von lizenzierten, zugangsunterstützten kompatiblen Vorrichtungen, die einen Satz von Nachrichten über einen geteilten Kommunikationskanal empfangen;
   Auswählen (1304) einer Platzierung einer Anforderung zum Reservieren des geteilten Kommunikationskanals in einem 3GPP-kompatiblen lizenzierten, zugangsunterstützten Protokoll;
   Übertragen (1306) der Anforderung zum Reservieren des geteilten Kommunikationskanals unter Verwendung eines Protokolls, das durch ein oder mehrere Funkzugangsnetzwerke in dem unlizenzierten Spektrum erkannt wird; und
   Übertragen (1308), unter Verwendung des 3GPP-kompatiblen lizenzierten, zugangsunterstützten Protokolls über den geteilten Kommunikationskanal, des Satzes von Nachrichten.

2. eNB nach Anspruch 1, wobei das eine oder die mehreren RANs ein drahtloses lokales Netzwerk umfassen.

3. eNB nach Anspruch 2, wobei der Prozessor ferner konfiguriert ist, um eine Zeitsteuerung in dem 3GPP-kompatiblen lizenzierten, zugangsunterstützten Protokoll zu konfigurieren, um die Anforderung zum Reservieren des geteilten Kommunikationskanals zu übertragen.

4. eNB nach Anspruch 3, wobei die Konfiguration der Zeitsteuerung in dem 3GPP-kompatiblen lizenzierten, zugangsunterstützten Protokoll ferner eine Auswahl von einem oder mehreren Steuerkanalsymbolen umfasst, die zu verwenden sind, um die Anforderung zum Reservieren des geteilten Kommunikationskanals zu übertragen.

5. eNB nach Anspruch 3, wobei die Konfiguration der Zeitsteuerung in dem 3GPP-kompatiblen lizenzierten, zugangsunterstützten Protokoll ferner eine Bereitstellung eines Reservierungsstummschaltsymbolmusterindikators an lizenzierten, zugangsunterstützten kompatible Vorrichtungen umfasst, die die Verfügbarkeit des geteilten Kommunikationskanals zum Übertragen der Anforderung zum Reservieren beschreiben.

6. eNB nach Anspruch 3, wobei die Konfiguration der Zeitsteuerung in dem 3GPP-kompatiblen lizenzierten, zugangsunterstützten Protokoll ferner eine Konfiguration der eNB umfasst, um einen Abschnitt des TDD-Schutzzeitraums zum Übertragen der Anforderung zum Reservieren zu verwenden.

7. eNB nach Anspruch 3, wobei die Konfiguration der Zeitsteuerung in dem 3GPP-kompatiblen lizenzierten, zugangsunterstützten Protokoll ferner eine Konfiguration der eNB umfasst, um ein TDD-Uplink-Pilot-Zeitschlitz-Feld zum Übertragen der Anforderung zum Reservieren zu verwenden.

8. eNB nach Anspruch 3, wobei die Konfiguration der Zeitsteuerung in dem 3GPP-kompatiblen lizenzierten, zugangsunterstützten Protokoll ferner eine Konfiguration der eNB umfasst, um einen leeren Uplink-Unterrahmen zum Übertragen der Anforderung zum Reservieren zu verwenden.

9. eNB nach Anspruch 3, wobei die Konfiguration der Zeitsteuerung in dem 3GPP-kompatiblen lizenzierten, zugangsunterstützten Protokoll ferner eine Konfiguration der eNB umfasst, um ein oder mehrere Referenzsymbole zum Bestimmen der Impulsantwort im Uplink zu reservieren, um die Anforderung zum Reservieren zu übertragen.

10. Verfahren zum Teilen eines unlizenzierten Spektrums, umfassend die folgenden Schritte, die durch eine eNB durchgeführt werden:

    Auswählen (1302) eines Satzes von lizenzierten, zugangsunterstützten kompatiblen Vorrichtungen, die einen Satz von Nachrichten über einen geteilten Kommunikationskanal empfangen;
    Auswählen (1304) einer Platzierung einer Anforderung zum Reservieren des geteilten Kommunikationskanals in einem 3GPP-kompatiblen lizenzierten, zugangsunterstützten Protokoll;
    Übertragen (1306) der Anforderung zum Reservieren des geteilten Kommunikationskanals unter Verwendung eines Protokolls, das durch ein oder mehrere Funkzugangsnetzwerke in dem unlizenzierten Spektrum erkannt wird; und Übertragen (1308), unter Verwendung des 3GPP-kompatiblen lizenzierten, zugangsunterstützten Protokolls über den geteilten Kommunikationskanal, des Satzes von Nachrichten.

**11.** Verfahren nach Anspruch 10, wobei das eine oder die mehreren Funkzugangsnetzwerke ein drahtloses lokales Netzwerk umfassen.

**12.** Verfahren nach Anspruch 11, das Verfahren ferner umfassend:
Konfigurieren einer Zeitsteuerung in dem 3GPP-kompatiblen lizenzierten, zugangsunterstützten Protokoll, um die Anforderung zum Reservieren des geteilten Kommunikationskanals zu übertragen.

**13.** Verfahren nach Anspruch 12, wobei das Konfigurieren der Zeitsteuerung in dem 3GPP-kompatiblen lizenzierten, zugangsunterstützten Protokoll ferner ein Auswählen von einem oder mehreren Steuerkanalsymbolen umfasst, die zu verwenden sind, um die Anforderung zum Reservieren des geteilten Kommunikationskanals zu übertragen, oder ferner ein Bereitstellen eines Reservierungsstummschaltsymbolmusterindikators an lizenzierte, zugangsunterstützte kompatible Vorrichtungen umfasst, die die Verfügbarkeit des geteilten Kommunikationskanals zum Übertragen der Anforderung zum Reservieren beschreiben, oder ferner ein Konfigurieren der eNB umfasst, um einen Abschnitt des TDD-Schutzzeitraums zum Übertragen der Anforderung zum Reservieren zu verwenden, oder ferner ein Konfigurieren der eNB umfasst, um ein TDD-Uplink-Pilot-Zeitschlitz-Feld zum Übertragen der Anforderung zum Reservieren zu verwenden, oder ferner ein Konfigurieren der eNB umfasst, um einen leeren Uplink-Unterrahmen zum Übertragen der Anforderung zum Reservieren zu verwenden, oder ferner ein Konfigurieren der eNB umfasst, um ein oder mehrere Referenzsymbole zum Bestimmen der Impulsantwort im UL zu reservieren, um die Anforderung zum Reservieren zu übertragen.

**14.** Maschinenlesbarer Speicher, der Anweisungen speichert, die bei Ausführung auf einer eNB die eNB dazu veranlassen, die Schritte des Verfahrens nach einem der Ansprüche 10-13 durchzuführen.

**Revendications**

**1.** Nœud B évolué (eNB) pour partager un spectre sans licence comprenant :
un processeur configuré pour :

sélectionner (1302) un ensemble de dispositifs compatibles pour un accès assisté sous licence qui recevront un ensemble de messages sur un canal de communication partagé ;
sélectionner (1304) une mise en place d'une demande pour réserver le canal de communication partagé au sein d'un protocole d'accès assisté sous licence compatible 3GPP ;
transmettre (1306) la demande pour réserver le canal de communication partagé en utilisant un protocole reconnu par un ou plusieurs réseaux d'accès radio dans le spectre sans licence ; et
transmettre (1308), en utilisant le protocole d'accès assisté sous licence compatible 3GPP sur le canal de communication partagé, l'ensemble de messages.

**2.** eNB selon la revendication 1, dans lequel le ou les réseaux d'accès radio comprennent un réseau local sans fil.

**3.** eNB selon la revendication 2, dans lequel le processeur est en outre configuré pour configurer une temporisation au sein du protocole d'accès assisté sous licence compatible 3GPP pour transmettre la demande pour réserver le canal de communication partagé.

**4.** eNB selon la revendication 3, dans lequel configurer la temporisation au sein du protocole d'accès assisté sous licence compatible 3GPP comprend en outre sélectionner un ou plusieurs symboles de canal de commande à utiliser pour transmettre la demande pour réserver le canal de communication partagé.

**5.** eNB selon la revendication 3, dans lequel configurer la temporisation au sein du protocole d'accès assisté sous licence compatible 3GPP comprend en outre fournir un indicateur de motif de symbole d'inhibition de réservation à des dispositifs compatibles pour un accès assisté sous licence qui décrivent une disponibilité du canal de communication partagé pour transmettre la demande pour réserver.

**6.** eNB selon la revendication 3, dans lequel configurer la temporisation au sein du protocole d'accès assisté sous licence compatible 3GPP comprend en outre configurer l'eNB pour utiliser une partie de période de garde TDD pour transmettre la demande pour réserver.

**7.** eNB selon la revendication 3, dans lequel configurer la temporisation au sein du protocole d'accès assisté sous licence compatible 3GPP comprend en outre configurer l'eNB pour utiliser un champ de créneau de temps pilote de liaison montante TDD pour transmettre la demande pour réserver.

8. eNB selon la revendication 3, dans lequel configurer la temporisation au sein du protocole d'accès assisté sous licence compatible 3GPP comprend en outre configurer l'eNB pour planifier une sous-trame de liaison montante vide pour transmettre la demande pour réserver.

9. eNB selon la revendication 3, dans lequel configurer la temporisation au sein du protocole d'accès assisté sous licence compatible 3GPP comprend en outre configurer l'eNB pour réserver un ou plusieurs symboles de référence de sondage en liaison montante pour transmettre la demande pour réserver.

10. Procédé pour partager un spectre sans licence comprenant les étapes suivantes mises en œuvre par un eNB :

   la sélection (1302) d'un ensemble de dispositifs compatibles pour un accès assisté sous licence qui recevront un ensemble de messages sur un canal de communication partagé ;
   la sélection (1304) d'une mise en place d'une demande pour réserver le canal de communication partagé au sein d'un protocole d'accès assisté sous licence compatible 3GPP ;
   la transmission (1306) de la demande pour réserver le canal de communication partagé en utilisant un protocole reconnu par un ou plusieurs réseaux d'accès radio dans le spectre sans licence ; et
   la transmission (1308), en utilisant le protocole d'accès assisté sous licence compatible 3GPP sur le canal de communication partagé, de l'ensemble de messages.

11. Procédé selon la revendication 10, dans lequel le ou les réseaux d'accès radio comprennent un réseau local sans fil.

12. Procédé selon la revendication 11, le procédé comprenant en outre :
   la configuration d'une temporisation au sein du protocole d'accès assisté sous licence compatible 3GPP pour transmettre la demande pour réserver le canal de communication partagé.

13. Procédé selon la revendication 12, dans lequel la configuration de la temporisation au sein du protocole d'accès assisté sous licence compatible 3GPP comprend en outre la sélection d'un ou plusieurs symboles de canal de commande à utiliser pour transmettre la demande pour réserver le canal de communication partagé, ou comprend en outre la fourniture d'un indicateur de motif de symbole d'inhibition de réservation à des dispositifs compatibles pour un accès assisté sous licence qui décrivent une disponibilité du canal de communication partagé pour transmettre la demande pour réserver, ou comprend en outre la configuration de l'eNB pour utiliser une partie de période de garde TDD pour transmettre la demande pour réserver, ou comprend en outre la configuration de l'eNB pour utiliser un champ de créneau de temps pilote de liaison montante TDD pour transmettre la demande pour réserver, ou comprend en outre la configuration de l'eNB pour planifier une sous-trame de liaison montante vide pour transmettre la demande pour réserver, ou comprend en outre la configuration de l'eNB pour réserver un ou plusieurs symboles de référence de sondage en UL pour transmettre la demande pour réserver.

14. Stockage lisible par machine stockant des instructions qui lorsqu'elles sont exécutées sur un eNB, amènent l'eNB à mettre en œuvre les étapes du procédé selon l'une quelconque des revendications 10 à 13.

FIG. 1

Backhaul Link — 116

Cell Tower

Access Point

104

106

WLAN Access Link

LTE-U Access Links

110

102

112

Computing
System

User Equipment

AP Coverage

Cell Tower
Coverage

108

100

FIG. 2

First OFDM Symbol in Control Region
Contains CRS, PCFICH, PHICH

300

302

LTE Subframe

304    314    302    306    302    306    310    310

303    302    302

LTE-U Channel Reservation
Signal

LTE-U Transmission

308

WLAN Transmission

312    312

▨ Control (PDCCH, PCFICH, PHICH etc.)

▦ LTE-U Channel Reservation Signal

▨ EPDCCH

▨ Data (PDSCH)

**Using OFDM Symbols from Control Region for LTE-U Channel Reservation Signal Transmission**

FIG. 3

402 — 404 — 406 —

LTE-U
Reservation
Signal

mPDCCH
Region

mPDSCH
Region

— 400

Non-LTE
Transmission Region

408 —

LTE Transmission Region

410 —

⬛ ⊞ CRS with Time Shift

## FIG. 4

**Modified LTE Subframe Structure to Accommodate LTE-U Reservation Signal**

LTE-U Transmission with a Combination of Modified Subframe Structure, Legacy Subframe Structure and Subframe Level Muting Gaps

FIG. 5

EP 3 100 508 B1

**LTE-U Reservation Signal Muting Pattern**

602 ▪ 604 ░ CRS

606 ▤ Control Region

608 ▨ Rate-Matched PDSCH Transmission

610 ▫ LTE-U Transmission Region

612

FIG. 6

EP 3 100 508 B1

700

702 CRS

704
706 Control Region

708 PDSCH Transmission

710 Punctured PDSCH, Used for LTE-U Transmission

FIG. 7

EP 3 100 508 B1

LTE FDD Frame Type 1

FIG. 8A

LTE TDD Frame Type 2
UL/DL Config = 2, Special SF Config = 6

FIG. 8B

FIG. 9

$T_{DL-UL}$

$T_{WiFi}=T_{GP}-\max\{T_{p1},\ T_{p2}\}-T_{DL-UL}$

$T_{p1}$

$T_{p2}$

eNB

UE$_A$

UE$_B$

UL

DL

EP 3 100 508 B1

**LTE-U Transmission with a Combination of Modified Subframe Structure, Legacy Subframe Structure and Subframe Level Muting Gaps**

FIG. 10

**Usage of SRS for Channel Reservation Signal Transmission**

FIG. 11

EP 3 100 508 B1

Transmission of Redundant LTE-U Channel Reservation Signal

FIG. 12

EP 3 100 508 B1

1300

Select a Set of Devices to Receive a Set of
Messages over Shared Channel
1302

Select a Placement of a Request to
Reserve the Shared Communication
Channel
1304

Transmit the Request to Reserve Using a
WLAN Protocol
1306

Transmit the Set of Messages
1308

FIG. 13

1400

| |
|---|
| Send a First Reservation Message for a Shared Medium over a First Protocol |

1402

| |
|---|
| Transmit First Data Over a Second Protocol Using the Shared Medium |

1404

| |
|---|
| Determine to Extend Use of the Medium by the Second Protocol |

1406

| |
|---|
| Send a Second Reservation Message for a Shared Medium over the First Protocol |

1408

FIG. 14

1500

| Broadcast a First Request Using a First Protocol to Reserve a Shared Band of Frequencies for a Duration of Time |
|---|

1502

| Transmit Data for a First Portion of the Duration of Time over a Second Protocol |
|---|

1504

| Broadcasting a Second Request Using the First Protocol to Reserve the Shared Band of Frequencies for a Remaining Portion of the Duration of Time |
|---|

1506

| Transmitting Data for a Second Portion of the Duration of Time over the Second Protocol |
|---|

1508

FIG. 15

1600

1602    1604  Data Router

| Non Access Stratum (NAS) | Internet Protocol (IP) |

1606

| Radio Resources Control (RRC) |

Control
Traffic    1608

User
Traffic

| Packet Data Convergence Protocol (PDCP) |

Control       Radio
Traffic       Bearers

1610

| Radio Link Control (RLC) |

Control
Traffic    1612    Logical
Channels

| Medium Access Control (MAC) |

L1 Configuration          Transport
and Measurement    1614    Channels

| Physical Layer (L1) |

Physical
Channels

FIG. 16

1702  1704  1702  1704

Subframe Index 0 | 1 | 2 | 3 | 4 | 5 | 6 | 7 | 8 | 9 | 10 | 11 | 12 | 13 | 14 | 15 | 6 | 7 | 8 | 9

a  b

☐ Muted subframe, can be used for WLAN transmission

**FIG. 17A** ▦ Subframe for LTE transmission

SUBFRAME LEVEL CO-EXISTENCE MUTING GAP

1706 1708  1706  1708  1706

Frame Index 0 | 1 | 2 | 3 | 4 | 5 | 6 | 7 | 8 | 9 | 10 | 11 | 12 | 13 | 14 | 15

a  b

☐ Muted frame, can be used for WLAN transmission

**FIG. 17B** ▦ Frame for LTE transmission

FRAME LEVEL CO-EXISTENCE MUTING GAP

1710  1712  1710  1712  1710  1712  1710

0 | 1 | 2 | 3 | 4 | 5 | 6 | 7 | 8 | 9 | 10 | 11 | 12 | 13 | 0 | 1 | 2 | 3 | 4 | 5 | 6 ...  0 | 1 | 2 | 3 | 4 | 5 | 6 | 7 | 8 | 9 | 10 | 11 | 12 | 13 | 0 ...

a  b  c

☐ Muted symbols, can be used for WLAN transmission

**FIG. 17C** ▦ Symbols for LTE transmission

SYMBOL LEVEL CO-EXISTENCE MUTING GAP

Wireless
Device

1800

Multiple
Antennas

Non-Volatile
Memory Port

Speaker

Liquid Crystal Display
(LCD) Screen and/or
Touch Screen Display

Speaker

Application
Processor

Graphics
Processor

Internal
Memory

Keyboard

Microphone

FIG. 18

**EP 3 100 508 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61933879
- US 20110205941 A1
- US 20130279376 A1
- US 20080108365 A1